(19) Europäisches Patentamt
European Patent Office
Office européen des brevets

(11) Veröffentlichungsnummer : **0 441 282 B1**

(12) **EUROPÄISCHE PATENTSCHRIFT**

(45) Veröffentlichungstag der Patentschrift :
**15.12.93 Patentblatt 93/50**

(51) Int. Cl.$^5$ : **C09B 53/02,** C09B 23/10, C09B 55/00, B41M 5/38

(21) Anmeldenummer : **91101435.5**

(22) Anmeldetag : **04.02.91**

(54) **Neue bichromophore Methin- und Azamethinfarbstoffe und ein Verfahren zu ihrer Übertragung.**

(30) Priorität : **15.02.90 DE 4004612**

(43) Veröffentlichungstag der Anmeldung :
**14.08.91 Patentblatt 91/33**

(45) Bekanntmachung des Hinweises auf die Patenterteilung :
**15.12.93 Patentblatt 93/50**

(84) Benannte Vertragsstaaten :
**CH DE FR GB IT LI**

(56) Entgegenhaltungen :
**EP-A- 0 227 096**
**EP-A- 0 250 954**
**DE-A- 3 524 519**
**JP-A-62 181 381**

(56) Entgegenhaltungen :
**HELVETICA CHIMICA ACTA, Band 72, Nr. 4, 14. Juni 1989, Seiten 638-647, Verlag Helvetica Chimica Acta, Basel, CH; M. KUSSLER et al.: "Neue Sulfobutyl-haltige Bis(dimethinmerocyanin)-Farbstoffe mit isolierten Chromophoren im Molekül und deren Aggregationsverhalten in wässeriger Lösung"**

(73) Patentinhaber : **BASF Aktiengesellschaft**
**Carl-Bosch-Strasse 38**
**D-67063 Ludwigshafen (DE)**

(72) Erfinder : **Bach, Volker, Dr.**
**Robert-Schuman-Strasse 8**
**W-6730 Neustadt (DE)**
Erfinder : **Etzbach, Karl-Heinz**
**Carl-Bosch-Ring 55**
**W-6710 Frankenthal (DE)**
Erfinder : **Sens, Ruediger, Dr.**
**Medicusstrasse 12**
**W-6800 Mannheim 1 (DE)**

EP 0 441 282 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Neue bichromophore Methin- und Azamethinfarbstoffe und ein Verfahren zu iher Übertragung

Die vorliegende Erfindung betrifft neue bichromophore Farbstoffe der Formel I

$$Z^2\text{-}Z^1\text{-}L\text{-}Y^1\text{-}Y^2 \qquad (I),$$

in der

L für ein Brückenglied, das keine Konjugation von $\pi$-Elektronen zwischen den Resten $Z^1$ und $Y^1$ zuläßt,

$Z^1$ und $Y^1$ gleich oder verschieden sind und in Verbindung mit dem Brückenglied L unabhängig voneinander jeweils für einen Rest der Formel

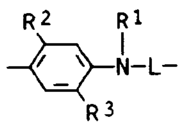 ,
(IIa)

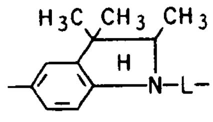 ,
(IIb)

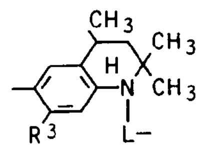 ,
(IIc)

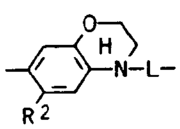 ,
(IId)

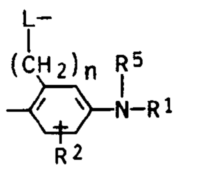 ,
(IIe)

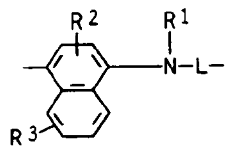 ,
(IIf)

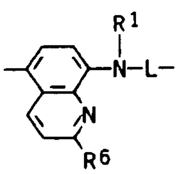 ,
(IIg)

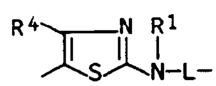 ,
(IIh)

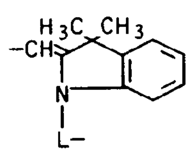 ,
(IIi)

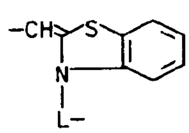 oder
(IIj)

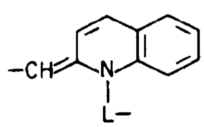 ,
(IIk)

worin

n gleich 0 oder 1,

$R^1$ und $R^5$ gleich oder verschieden sind und unabhängig voneinander jeweils Alkyl, Alkoxyalkyl, Alkoxycarbonylalkyl oder Alkanoyloxyalkyl, wobei diese Reste jeweils bis zu 10 Kohlenstoffatome aufweisen und gegebenenfalls durch Hydroxy oder Cyano substituiert sein können, Wasserstoff, Benzyl, Cyclohexyl, Phenyl oder Tolyl,

$R^2$ und $R^3$ gleich oder verschieden sind und unabhängig voneinander jeweils Wasserstoff, $C_1$-$C_8$-Alkyl, $C_1$-$C_6$-Alkoxy, $C_1$-$C_6$-Alkanoylamino oder $C_1$-$C_6$-Alkylsulfonylamino,

$R^4$ Wasserstoff, Halogen, $C_1$-$C_8$-Alkyl, gegebenenfalls durch $C_1$-$C_4$-Alkyl oder $C_1$-$C_4$-Alkoxy substi-

tuiertes Phenyl, gegebenenfalls durch $C_1$-$C_4$-Alkyl oder $C_1$-$C_4$-Alkoxy substituiertes Benzyl, Cyclohexyl, Thienyl oder den Rest -NHR[1], wobei $R^1$ die obengenannte Bedeutung besitzt, und

$R^6$ Wasserstoff oder $C_1$-$C_8$-Alkyl bedeuten, und

$Z^2$ und $Y^2$ gleich oder verschieden sind und unabhängig voneinander jeweils für einen Rest der Formel

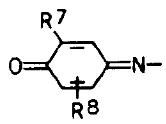 ,
(IIIa)

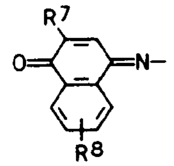 ,
(IIIb)

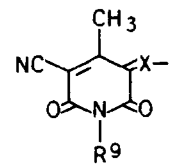 ,
(IIIc)

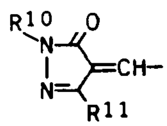 ,
(IIId)

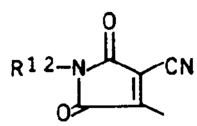
(IIIe)

oder

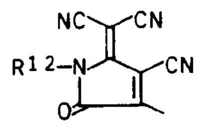
(IIIf)

stehen, worin

x Stickstoff oder den Rest CH,

$R^7$ $C_1$-$C_6$-Alkoxycarbonyl, $C_1$-$C_6$-Monoalkylcarbamoyl, $C_1$-$C_6$-Monoalkylsulfamoyl, $C_1$-$C_6$-Alkanoylamino oder $C_1$-$C_6$-Alkylsulfonylamino, wobei die Alkylgruppen jeweils durch 1 oder 2 Sauerstoffatome unterbrochen sein können, $C_5$-$C_7$-Cycloalkoxycarbonyl, $C_5$-$C_7$-Monocycloalkylcarbamoyl, $C_5$-$C_7$-Monocycloalkylsulfamoyl, $C_5$-$C_7$-Cycloalkylcarbonylamino, Phenoxycarbonyl, Monophenylcarbamoyl, Monophenylsulfamoyl, Benzoylamino, Phenylsulfonylamino, Methylsulfonylamino, Fluor oder Chlor,

$R^8$ $C_1$-$C_8$-Alkyl, $C_1$-$C_6$-Alkanoylamino oder $C_1$-$C_6$-Alkylsulfonylamino, wobei die Alkylgruppen jeweils durch 1 oder 2 Sauerstoffatome unterbrochen sein können, $C_5$-$C_7$-Cycloalkylcarbonylamino, $C_5$-$C_7$-Cycloalkylsulfonylamino, Benzoylamino, Phenylsulfonylamino, Wasserstoff, Fluor oder Chlor,

$R^9$ Wasserstoff oder gegebenenfalls durch 1 oder 2 Sauerstoffatome unterbrochenes $C_1$-$C_8$-Alkyl,

$R^{10}$ Phenyl oder $C_1$-$C_4$-Alkylphenyl,

$R^{11}$ $C_1$-$C_8$-Alkyl oder $C_1$-$C_6$-Dialkylamino und

$R^{12}$ Wasserstoff oder $C_1$-$C_8$-Alkyl bedeuten.

Bichromophore Methinfarbstoffe, die Dicyanovinylreste aufweisen, sind aus der GB-A-1 201 925, US-A-3 553 245, DE-A-1 569 678, DE-A-2 519 592 oder DE-A-3 020 473 bekannt.

Aufgabe der vorliegenden Erfindung war es nun, neuartige bichromophore Methin- und Azamethinfarbstoffe bereitzustellen, die über vorteilhafte anwendungstechnische Eigenschaften verfügen sollten.

Demgemäß wurden die eingangs näher bezeichneten bichromophoren Farbstoffe der Formel I gefunden.

Das Brückenglied L, das keine Konjugation von π-Elektronen zwischen den Resten $Z^1$ und $Y^1$ zuläßt, gehorcht im allgemeinen der Formel

$$-E^1\text{-}D\text{-}E^2- ,$$

worin

D eine chemische Bindung, ein Sauerstoff, $-SO_2-$, -O-CO-O-, 1,4-Cyclohexylen, Phenylen, -O-CO-$(CH_2)_l$-CO-O, -O-$(CH_2)_m$-O-,

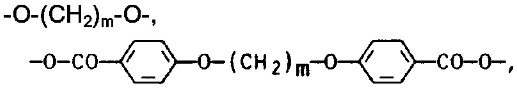

wobei l für 1 bis 10 und m für 2 bis 10 stehen,

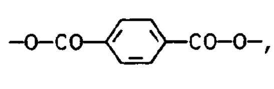

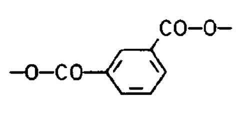 ,

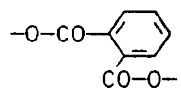 oder 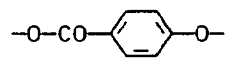

und

E[1] und E[2] gleich oder verschieden sind und unabhängig voneinander jeweils eine chemische Bindung oder $C_1$-$C_{15}$-Alkylen bedeuten.

Alle in den obengenannten Formeln auftretenden Alkyl- und Alkylenreste können sowohl geradkettig als auch verzweigt sein.

Geeignete Reste $R^1$, $R^2$, $R^3$, $R^4$, $R^5$, $R^6$, $R^8$, $R^{10}$ und $R^{11}$ sind z.B. Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl oder Isooctyl.

Reste $R^1$ und $R^5$ sind weiterhin z.B. Nonyl, Isononyl, Decyl, Isodecyl, 2-Methoxyethyl, 2-Ethoxyethyl, 2-Propoxyethyl, 2-Butoxyethyl, 2-oder 3-Methoxypropyl, 2-oder 3-Ethoxypropyl, 2- oder 3-Propoxypropyl, 2- oder 3-Butoxypropyl, 4-Methoxybutyl, 4-Ethoxybutyl, 4-Butoxybutyl, 2-Cyanoethyl, 3-Cyanopropyl, 4-Cyanobutyl, 2-Hydroxyethyl,

$$-(CH_2)_2-O-\overset{\overset{O}{\|}}{C}-CH_3,\quad -(CH_2)_2-\overset{\overset{O}{\|}}{C}-O-C_4H_9,\quad -(CH_2)_4-\overset{\overset{O}{\|}}{C}-O-CH(CH_3)_2,\quad -(CH_2)_3-\overset{\overset{O}{\|}}{C}-O-C_4H_9$$

Reste $R^4$ sind weiterhin z.B. Phenyl, 2-, 3- oder 4-Methylphenyl, 2- oder 4-Isopropylphenyl, 2-Butylphenyl, 2-, 3- oder 4-Methoxyphenyl, 2-Propoxyphenyl, 4-Butoxyphenyl, 2-(But-2-oxy)phenyl, Benzyl, 2-, 3- oder 4-Methylbenzyl, 2-, 3- oder 4-Methoxybenzyl, Fluor, Chlor, Brom, Thien-2-yl oder Thien-3-yl.

$R^2$ und $R^3$ sind weiterhin Methoxy, Ethoxy, Propoxy, Isopropoxy, Butoxy, Isobutoxy, sec-Butoxy, Pentyloxy, Isopentyloxy, Neopentyloxy oder Hexyloxy.

Reste $R^2$, $R^3$ und $R^8$ sind weiterhin z.B. Formylamino, Acetylamino, Propionylamino, Butyrylamino, Methylsulfonylamino, Ethylsulfonylamino, Propylsulfonylamino, Isopropylsulfonylamino oder Butylsulfonylamino.

Reste $R^7$ sind z.B. Methoxycarbonyl, Ethoxycarbonyl, Propoxycarbonyl, Isopropoxycarbonyl, Butoxycarbonyl, 2-Methoxyethoxycarbonyl, Methylcarbamoyl, Ethylcarbamoyl, 2-Methoxyethylcarbamoyl, Cyclopentyloxycarbonyl, Cyclohexyloxycarbonyl, Cycloheptyloxycarbonyl, Cyclopentylcarbamoyl, Cyclohexylcarbamoyl, Cycloheptylcarbamoyl, Methylsulfamoyl, Ethylsulfamoyl, 2-Methoxyethylsulfamoyl, Cyclopentylsulfamoyl, Cyclohexylsulfamoyl, Cycloheptylsulfamoyl, Methylsulfonylamino, Ethylsulfonylamino oder p-Methylphenylsulfonylamino.

Reste $R^{11}$ sind weiterhin, wie auch die Reste $R^8$, z.B. Cyclopentylcarbonylamino, Cyclohexylcarbonylamino oder Cycloheptylcarbonylamino.

Reste $R^8$ sind weiterhin z.B. Cyclopentylsulfonylamino, Cyclohexylsulfonylamino oder Cycloheptylsulfonylamino.

Reste $R^9$ sind weiterhin z.B. 2-Methoxyethyl, 2-Ethoxyethyl oder 3,6-Dioxaheptyl.

Reste $R^{10}$ sind z.B. 2-, 3- oder 4-Methylphenyl oder 2-, 3- oder 4-Ethylphenyl.

Reste $R^{11}$ sind weiterhin z.B. Dimethylamino, Diethylamino, Dipropylamino, Diisopropylamino oder Dibutylamino.

Reste $E^1$ und $E^2$ sind z.B. Methylen, 1,2-Ethylen, Ethyliden, 1,2- oder 1,3-Propylen oder 1,4-, 1,3- oder 2,3-Butylen.

Reste D sind z.B.

$$-O-\overset{\overset{O}{\|}}{C}-CH_2-\overset{\overset{O}{\|}}{C}-O-,\quad -O-\overset{\overset{O}{\|}}{C}-(CH_2)_2-\overset{\overset{O}{\|}}{C}-O-,\quad -O-\overset{\overset{O}{\|}}{C}-(CH_2)_3-\overset{\overset{O}{\|}}{C}-O-,\quad -O-\overset{\overset{O}{\|}}{C}-(CH_2)_4-\overset{\overset{O}{\|}}{C}-O-,$$

$$-O-\overset{\overset{O}{\|}}{C}-(CH_2)_5-\overset{\overset{O}{\|}}{C}-O-,\quad -O-\overset{\overset{O}{\|}}{C}-(CH_2)_6-\overset{\overset{O}{\|}}{C}-O-,\quad -O-\overset{\overset{O}{\|}}{C}-(CH_2)_7-\overset{\overset{O}{\|}}{C}-O-,$$

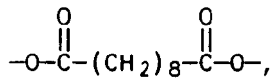 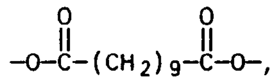 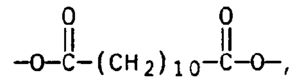

$-O-(CH_2)_2-O-$, $-O-(CH_2)_3-O-$, $-O-(CH_2)_4-O-$, $-O-(CH_2)_5-O-$, $-O-(CH_2)_6-O-$, $-O-(CH_2)_7-O-$, $-O-(CH_2)_8-O-$, $-O-(CH_2)_9-O-$, $-O-(CH_2)_{10}-O-$,

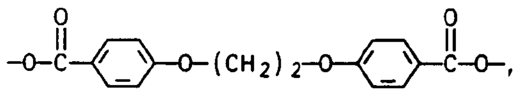 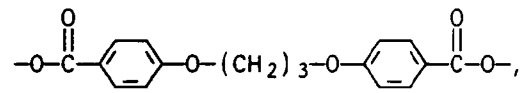

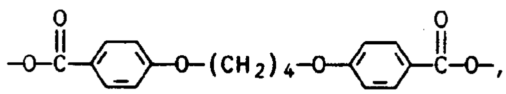 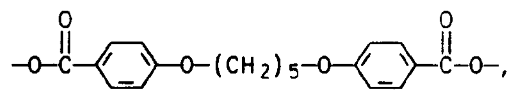

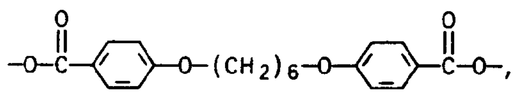 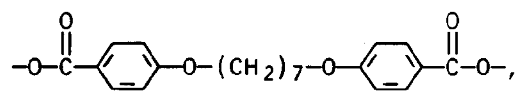

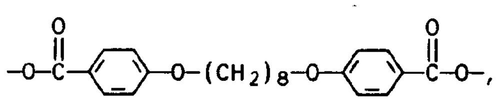 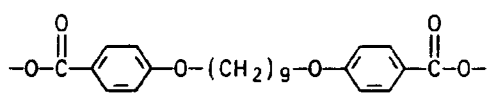

oder

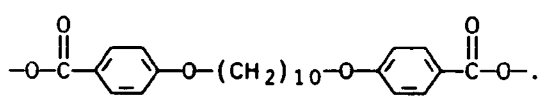

Bevorzugt sind Farbstoffe der Formel I, in der die Reste $Z^1$-L und $Y^1$-L den Formeln IIa bis IIh und die Reste $Z^2$ und $Y^2$ den Formeln IIIe oder IIIf gehorchen und die Reste $R^1$, $R^2$, $R^3$, $R^4$, $R^5$, $R^6$ und $R^{12}$ jeweils die obengenannte Bedeutung besitzen.

Bevorzugt sind weiterhin Farbstoffe der Formel I, in der die Reste $Z^1$-L und $Y^1$-L den Formeln IIa bis IIj und die Reste $Z^2$ und $Y^2$ den Formeln IIIa, IIIb oder IIIc gehorchen und die Reste $R^1$, $R^2$, $R^3$, $R^5$, $R^6$, $R^7$, $R^8$ und $R^9$ jeweils die obengenannte Bedeutung besitzen.

Bevorzugt sind weiterhin Farbstoffe der Formel I, in der die Reste $Z^1$-L und $Y^1$-L den Formeln IIi, IIj oder IIk und die Reste $Z^2$ und $Y^2$ der Formel IIId gehorchen und die Reste $R^{10}$ und $R^{11}$ jeweils die obengenannte Bedeutung besitzen.

Bevorzugt sind weiterhin Farbstoffe der Formel I, in der

- $R^1$ und $R^5$ unabhängig voneinander Wasserstoff, gegebenenfalls durch Cyano oder Acetyl substituiertes $C_1$-$C_6$-Alkyl oder Cyclohexyl,
- $R^2$ und $R^3$ unabhängig voneinander Wasserstoff, Methyl, Methoxy oder Acetylamino,
- $R^4$ Wasserstoff oder $C_1$-$C_6$-Alkyl, gegebenenfalls durch Methyl oder Methoxy substituiertes Phenyl, Thien-2-yl oder Thien-3-yl und
- $R^6$ Wasserstoff oder $C_1$-$C_6$-Alkyl bedeuten.

Bevorzugt sind weiterhin Farbstoffe der Formel I, in der

- $R^8$ Wasserstoff, $C_1$-$C_6$-Alkyl oder $C_1$-$C_6$-Alkanoylamino und
- $R^9$ Wasserstoff oder $C_1$-$C_6$-Alkyl, das gegebenenfalls durch ein Sauerstoffatom unterbrochen ist, bedeuten.

Besonders bevorzugt sind Farbstoffe der Formel I, worin das Brückenglied L die Formel

$$-E^1-D-E^2-$$

aufweist, wobei

$E^1$ und $E^2$ unabhängig voneinander $C_1$-$C_4$-Alkylen und
D eine chemische Bindung, Sauerstoff, $-SO_2-$, $-O-CO-(CH_2)_l-CO-O$,

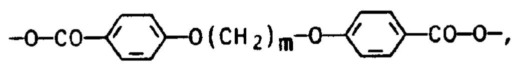

wobei l für 2 bis 4 und m für 6 bis 10 stehen,

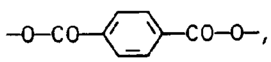

,

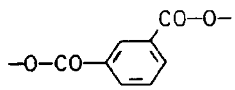

oder

oder 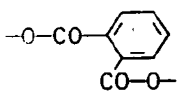

bedeuten.

Die erfindungsgemäßen Farbstoffe I können nach an sich bekannten Methoden, wie sie beispielsweise in der GB 1 201 925, US-A-3 553 245, DE-A-1 569 678, DE-A-2 519 592, DE-A-3 020 473, US-A-4 839 336, US-A-4 541 830, EP-A-147 747, US-A-4 769 360, US-A-4 695 287, DE-A-3 524 519, US-A-3 096 339 oder US-A-3 013 013 oder in Angew. Chem. 74, 818 (1962) beschrieben sind, erhalten werden.

Eine bevorzugte Verfahrensweise besteht z.B. darin, zuerst die beiden im Farbstoff als Donator wirkenden Gruppen $Z^1$ und $Y^1$ mittels eines entsprechenden Brückengliedes miteinander zu verknüpfen und aus den resultierenden Zwischenprodukten (nachfolgend als Farbstoffvorprodukte bezeichnet) anschließend die Farbstoffe I durch den Einbau der als Acceptoren wirkenden Gruppen $Z^2$ und $Y^2$ herzustellen.

Zur näheren Erläuterung sind beispielhaft Syntheseschemata zur Herstellung der Farbstoffe I aufgeführt. Für die Reste $Z^1$, $Y^1$, $R^7$ und $R^8$ gilt dabei jeweils die obengenannte Bedeutung.

a) Synthese der Farbstoffvorprodukte

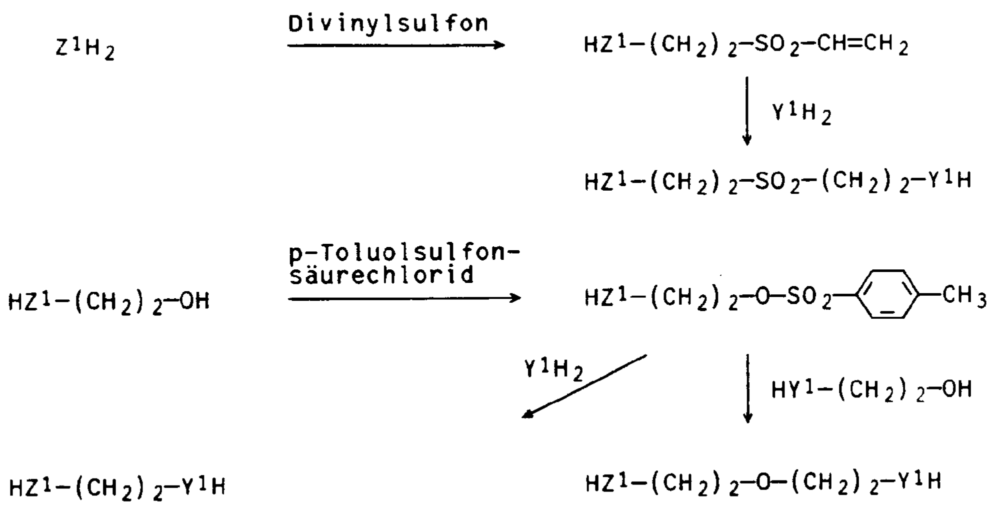

b) Einbau der Acceptoren (am Beispiel des Restes IIIa)

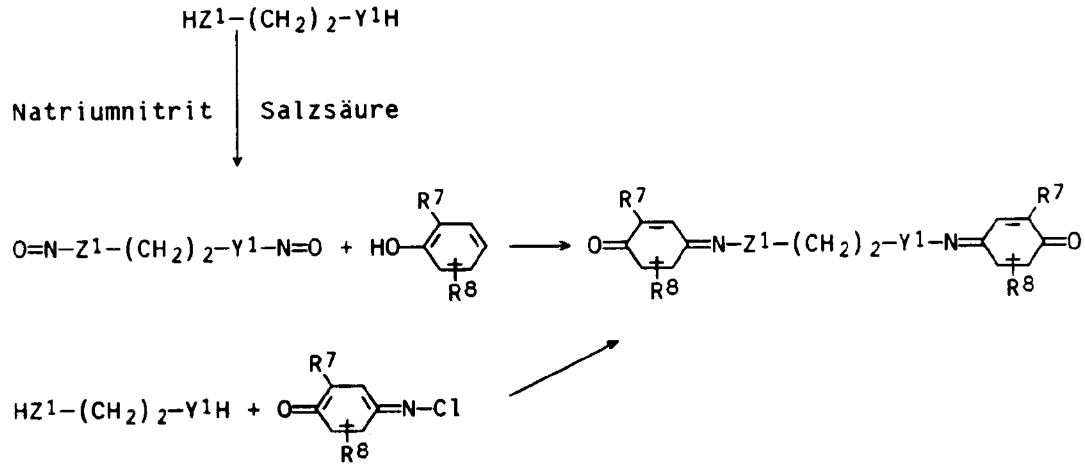


Analog können auch die anderen Farbstoffvorprodukte mit den jeweiligen Acceptoren umgesetzt werden.

Die neuen Farbstoffe I verfügen über eine vorteilhafte Löslichkeit in organischen Lösungsmitteln.

Eine weitere Aufgabe der vorliegenden Erfindung war es, ein neues Verfahren für den thermischen Transfer von Farbstoffen bereitzustellen.

Beim Thermotransferdruckverfahren wird ein Transferblatt, das einen thermisch transferierbaren Farbstoff in einem oder mehreren Bindemitteln, gegebenenfalls zusammen mit geeigneten Hilfsmitteln, auf einem Träger enthält, mit einer Energiequelle, z.B. mit einem Heizkopf, durch kurze Heizimpulse (Dauer: Bruchteile einer Sekunde) von der Rückseite her erhitzt, wodurch der Farbstoff aus dem Transferblatt migriert und in die Oberflächenbeschichtung eines Aufnahmemediums hineindiffundiert. Der wesentliche Vorteil dieses Verfahrens besteht darin, daß die Steuerung der zu übertragenden Farbstoffmenge (und damit die Farbabstufung) durch Einstellung der von der Energiequelle abzugebenden Energie leicht möglich ist.

Allgemein wird die Farbaufzeichnung unter Verwendung der drei subtraktiven Grundfarben Gelb, Magenta, Cyan (und gegebenenfalls Schwarz) durchgeführt. Um eine optimale Farbaufzeichnung zu ermöglichen, müssen die Farbstoffe folgende Eigenschaften besitzen:

- leichte thermische Transferierbarkeit,
- geringe Migration innerhalb oder aus der Oberflächenbeschichtung des Aufnahmemediums bei Raumtemperatur,
- hohe thermische und photochemische Stabilität sowie Resistenz gegen Feuchtigkeit und chemische Stoffe,
- für subtraktive Farbmischung die geeigneten Farbtöne aufweisen,
- einen hohen molaren Absorptionskoeffizienten aufweisen,
- bei Lagerung des Transferblattes nicht auskristallisieren.

Diese Forderungen sind erfahrungsgemäß gleichzeitig sehr schwierig zu erfüllen.

Daher entsprechen die meisten der bekannten, für den thermischen Transferdruck verwendeten Farbstoffe nicht dem geforderten Anforderungsprofil.

Es wurde nun gefunden, daß die Übertragung von bichromophoren Methinfarbstoffen von einem Träger auf ein mit Kunststoff beschichtetes Papier mit Hilfe einer Energiequelle vorteilhaft gelingt, wenn man einen Träger verwendet, auf dem sich ein oder mehrere Farbstoffe der Formel I

$$Z^2\text{-}Z^1\text{-}L\text{-}Y^1\text{-}Y^2 \qquad (I)$$

befinden, in der

L
: für ein Brückenglied, das keine Konjugation von $\pi$-Elektronen zwischen den Resten $Z^1$ und $Y^1$ zuläßt,

$Z^1$ und $Y^1$
: gleich oder verschieden sind und in Verbindung mit dem Brückenglied L unabhängig voneinander jeweils für einen Rest der Formel

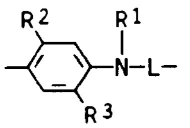 ,

(IIa)

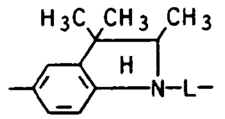 ,

(IIb)

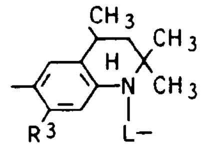 ,

(IIc)

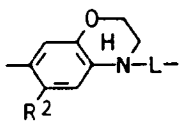 ,

(IId)

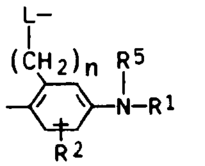 ,

(IIe)

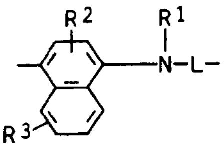 ,

(IIf)

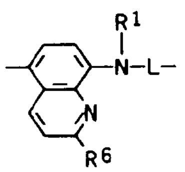 ,

(IIg)

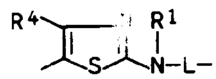 ,

(IIh)

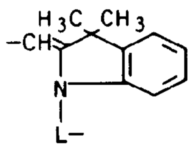 ,

(IIi)

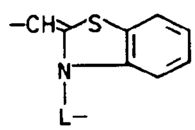 oder

(IIj)

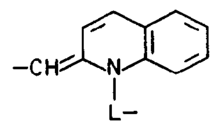 ,

(IIk)

worin

n gleich 0 oder 1,

$R^1$ und $R^5$ gleich oder verschieden sind und unabhängig voneinander jeweils Alkyl, Alkoxyalkyl, Alkoxycarbonylalkyl oder Alkanoyloxyalkyl, wobei diese Reste jeweils bis zu 10 Kohlenstoffatome aufweisen und gegebenenfalls durch Hydroxy oder Cyano substituiert sein können, Wasserstoff, Benzyl, Cyclohexyl, Phenyl oder Tolyl,

$R^2$ und $R^3$ gleich oder verschieden sind und unabhängig voneinander jeweils Wasserstoff, $C_1$-$C_8$-Alkyl, $C_1$-$C_6$-Alkoxy, $C_1$-$C_6$-Alkanoylamino oder $C_1$-$C_6$-Alkylsulfonylamino,

$R^4$ Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Thienyl oder den Rest -$NHR^1$, wobei $R^1$ die obengenannte Bedeutung besitzt, und

$R^6$ Wasserstoff oder $C_1$-$C_8$-Alkyl bedeuten, und

$Z^2$ und $Y^2$ gleich oder verschieden sind und unabhängig voneinander jeweils für einen Rest der Formel

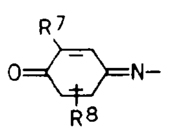 ,

(IIIa)

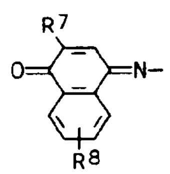 ,

(IIIb)

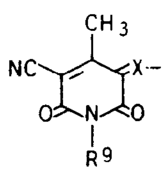 ,

(IIIc)

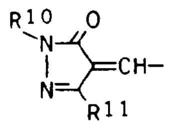

(IIId)

,

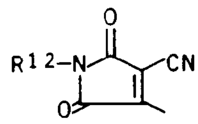

(IIIe)

oder

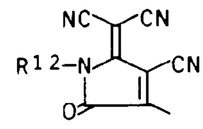

(IIIf)

stehen, worin

X Stickstoff oder den Rest CH,

$R^7$ $C_1$-$C_6$-Alkoxycarbonyl, $C_1$-$C_6$-Monoalkylcarbamoyl, $C_1$-$C_6$-Monoalkylsulfamoyl, $C_1$-$C_6$-Alkanoylamino oder $C_1$-$C_6$-Alkylsulfonylamino, wobei die Alkylgruppen jeweils durch 1 oder 2 Sauerstoffatome unterbrochen sein können, $C_5$-$C_7$-Cycloalkoxycarbonyl, $C_5$-$C_7$-Monocycloalkylcarbamoyl, $C_5$-$C_7$-Monocycloalkylsulfamoyl, $C_5$-$C_7$-Cycloalkylcarbonylamino, Phenoxycarbonyl, Monophenylcarbamoyl, Monophenylsulfamoyl, Benzoylamino, Phenylsulfonylamino, Methylphenylsulfonylamino, Fluor oder Chlor,

$R^8$ $C_1$-$C_8$-Alkyl, $C_1$-$C_6$-Alkanoylamino oder $C_1$-$C_6$-Alkylsulfonylamino, wobei die Alkylgruppen jeweils durch 1 oder 2 Sauerstoffatome unterbrochen sein können, $C_5$-$C_7$-Cycloalkylcarbonylamino, $C_5$-$C_7$-Cycloalkylsulfonylamino, Benzoylamino, Phenylsulfonylamino, Wasserstoff, Fluor oder Chlor,

$R^9$ Wasserstoff oder gegebenenfalls durch 1 oder 2 Sauerstoffatome unterbrochenes $C_1$-$C_8$-Alkyl,

$R^{10}$ Phenyl oder $C_1$-$C_4$-Alkylphenyl,

$R^{11}$ $C_1$-$C_8$-Alkyl oder $C_1$-$C_6$-Dialkylamino und

$R^{12}$ Wasserstoff oder $C_1$-$C_8$-Alkyl bedeuten.

Im Vergleich zu den bei den bekannten Verfahren verwendeten Farbstoffen zeichnen sich die beim erfindungsgemäßen Verfahren übertragenen Farbstoffe im allgemeinen durch verbesserte Fixierung im Aufnahmemedium bei Raumtemperatur, leichtere thermische Transferierbarkeit, höhere Lichtechtheit, höhere Stabilität gegenüber Feuchtigkeit und chemischen Stoffen, bessere Löslichkeit in organischen Lösungsmitteln, höhere Farbbandstabilität und höhere Farbtonreinheit aus.

Weiterhin ist überraschend, daß die Farbstoffe der Formel I gut transferierbar sind und hohe Farbbandstabilität aufweisen, obwohl sie ein sehr hohes Molekulargewicht aufweisen.

In den bisher bekannten Thermotransferdruck-Systemen werden Mischungen monochromophorer Farbstoffe eingesetzt, um im Cyan- und im Magentabereich jeweils ca. ein Drittel des einfallenden weißen Lichtes zu absorbieren. Dabei tritt das Problem auf, daß die eingesetzten Farbstoffe exakt gleiches Transferverhalten zeigen müssen, damit bei einer vorgegebenen Leistung des Thermokopfes gleiche Anfärbungen des Nehmers erreicht werden. Beim erfindungsgemäßen Verfahren treten diese Nachteile nicht mehr auf.

Aufgrund ihrer hohen molaren Extinktionskoeffizienten und ihrer hohen Brillanz sind die im neuen Verfahren angewandten Farbstoffe der Formel I für die Herstellung eines, für die subtraktive Farbmischung erforderlichen, Trichromiesystems vorteilhaft geeignet.

Zusätzlich erlaubt die gute Transferierbarkeit eine große Variation der als Nehmer verwendeten Kunststoffe und somit eine sehr gute Anpassung der Farbstoffe in das Gesamtsystem (Geber/Nehmer).

Zur Herstellung der für das erfindungsgemäße Verfahren benötigten Farbstoffträger werden die Farbstoffe in einem geeigneten organischen Lösungsmittel oder in Mischungen von Lösungsmitteln mit einem oder mehreren Bindemitteln, gegebenenfalls unter Zugabe von Hilfsmitteln, zu einer Druckfarbe verarbeitet. Diese enthält den Farbstoff vorzugsweise in molekular-dispers gelöster Form. Die Druckfarbe kann mittels einer Rakel auf den inerten Träger aufgetragen und die Färbung an der Luft getrocknet werden.

Geeignete organische Lösungsmittel für die Farbstoffe I sind z.B. solche, in denen die Löslichkeit der Farbstoffe I bei einer Temperatur von 20°C größer als 1 Gew.%, vorzugsweise größer als 5 Gew.% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, welche in organischen Lösungsmitteln löslich sind und den Farbstoff an den inerten Träger abriebfest zu binden vermögen. Dabei werden solche Bindemittel bevorzugt, welche den Farbstoff nach Trocknung der Druckfarbe an der Luft in Form eines klaren, transparenten Films aufnehmen, ohne daß dabei eine sichtbare Auskristallisation des Farbstoffes auftritt.

Beispiele für solche Bindemittel sind Cellulosederivate, z.B. Methylcellulose, Ethylcellulose, Ethylhydroxyethylcellulose, Hydroxypropylcellulose, Celluloseacetat oder Celluloseacetobutyrat, Stärke, Alginate, Alkydresins, Vinylresins, Polyvinylalkohol, Polyvinylacetat, Polyvinylbutyrat oder Polyvinylpyrrolidone. Weiterhin kommen Polymere und Copolymere von Acrylaten oder deren Derivate, wie Polyacrylsäure, Polymethylmethacrylat oder Styrolacrylatcopolymere, Polyesterresins, Polyamidresins, Polyurethanresins oder natürliche CH-Resins, wie Gummi Arabicum, als Bindemittel in Betracht. Weitere geeignete Bindemittel sind z.B. in der DE-A-3 524 519 beschrieben.

Bevorzugte Bindemittel sind Ethylcellulose, Ethylhydroxyethylcellulose, Polyvinylbutyrat und Polyvinylacetat.

Das Gewichtsverhältnis Bindemittel:Farbstoff beträgt im allgemeinen 1:1 bis 10:1.

Als Hilfsmittel kommen z.B. Trennmittel in Betracht, wie sie in der EP-A-227 092, EP-A-192 435 oder den dort zitierten Patentanmeldungen genannt sind. Darüber hinaus sind besonders organische Additive zu nennen, welche das Auskristallisieren der Transferfarbstoffe bei Lagerung und beim Erhitzen des Farbbandes verhindern, z.B. Cholesterin oder Vanillin.

Inerte Träger sind z.B. Seiden-, Lösch- oder Pergaminpapier oder Kunststoffolien mit guter Wärmebeständigkeit, z.B. gegebenenfalls metallbeschichteter Polyester, Polyamid oder Polyimid. Der inerte Träger wird auf der dem Thermokopf zugewandten Seite gegebenenfalls zusätzlich mit einer Gleitmittelschicht (Slipping layer) beschichtet, um ein Verkleben des Thermokopfes mit dem Trägermaterial zu verhindern. Geeignete Gleitmittel werden z.B. in der EP-A-216 483 oder EP-A-227 095 beschrieben. Die Dicke des Farbstoff-Trägers beträgt im allgemeinen 3 bis 30 µm, vorzugsweise 5 bis 10 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Geeignete Rezepturen für die Nehmerschichtzusammensetzung werden z.B. in der EP-A-227 094, EP-A-133 012, EP-A-133 011, EP-A-111 004, JP-A-199 997/1986, JP-A-283 595/1986, JP-A-237 694/1986 oder JP-A-127 392/1986 ausführlich beschrieben.

Die Übertragung erfolgt mittels einer Energiequelle, z.B. mittels eines Lasers oder mittels eines Thermokopfes, der auf eine Temperatur von ≧ 300°C aufheizbar sein muß, damit der Farbstofftransfer im Zeitbereich t: 0 < t < 15 msec erfolgen kann. Dabei migriert der Farbstoff aus dem Transferblatt und diffundiert in die Oberflächenbeschichtung des Aufnahmemediums.

Die erfindungsgemäßen Farbstoffe eignen sich weiterhin vorteilhaft zum Färben von synthetischen Materialien, z.B. von Polyestern, Polyamiden oder Polycarbonaten.

Die folgenden Beispiele sollen die Erfindung näher erläutern. Angaben über Prozente beziehen sich, sofern nicht anders vermerkt, auf das Gewicht.

Herstellung der Farbstoffe

Beispiel 1

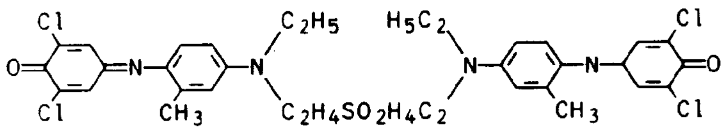

3,9 g Bis [2-(N-ethyl-m-toluidino)ethyl]sulfon (erhalten nach der Vorschrift der US-A-3 553 245) wurden in 50 ml Eisessig eingetragen. Bei Raumtemperatur wurden 4,2 g 2,6-Dichlorbenzochinonchlorimin unter starkem Rühren zugegeben. Nach vollständiger Umsetzung (DC-Kontrolle) wurde die Reaktionsmischung in eine Eis/Wasser-Mischung eingerührt, mit Natronlauge (10 Gew.-%) auf pH6 eingestellt, der entstehende Niederschlag abgesaugt, mit Wasser gewaschen, bei 40 bis 50°C unter vermindertem Druck getrocknet und anschließend an Kieselgel mit Toluol/Essigester (5:1 v/v) chromatographiert.

$\lambda_{max}$ ($CH_2Cl_2$) : 634 nm

$R_f$-Wert (Toluol/Essigester 5:1 v/v): 0,33

In analoger Weise wurden die im folgenden aufgeführten Farbstoffe erhalten.

Erläuterung zu Tabelle 1:

Farbstoffe der Formel

$$Q - W - Q ,$$

wobei W entweder

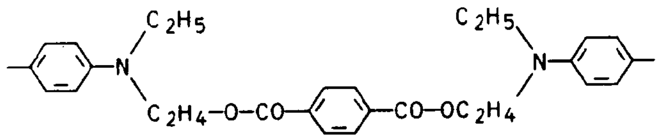

(W1)

oder

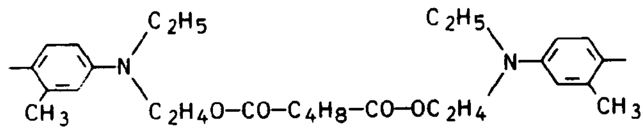

(W2)

bedeutet.

$\lambda_{max}$ wurde jeweils in Tetrahydrofuran gemessen.

Die Symbole der Fließmittel haben folgende Bedeutung:

A: Essigester

B: Toluol/Essigester 3:2 v/v

C: Toluol/Essigester 8:2 v/v

D: Toluol/Essigester 9:1 v/v

Tabelle 1

| Bsp.Nr. | Q | W | $R_f$-Wert | Fließmittel | $\lambda_{max}$ [nm] |
|---|---|---|---|---|---|
| 2 | 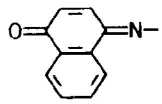 | $W^1$ | 0,14 | A | 597 |
| 3 | 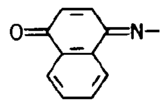 | $W^2$ | 0,80 | A | 600 |
| 4 | 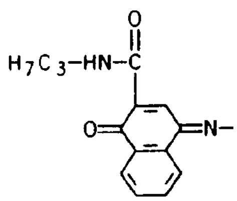 | $W^2$ | 0,48 | B | 638 |
| 5 | 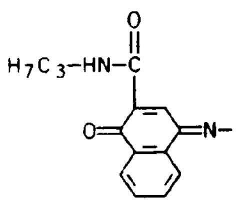 | W2 | 0,41 | B | 661 |
| 6 | 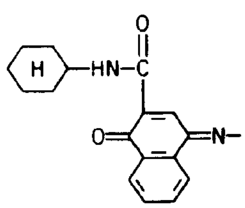 | $W^1$ | 0,77 | A | 638 |
| 7 | 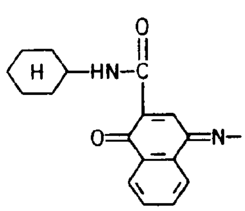 | $W^2$ | 0,58 | B | 661 |

Tabelle 1 (Fortsetzung)

| Bsp.Nr. | Q | W | $R_f$-Wert | Fließmittel | $\lambda_{max}$ [nm] |
|---|---|---|---|---|---|
| 8 | 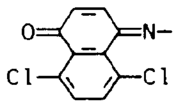 | $W^1$ | 0,45 | C | 572 |
| 9 | 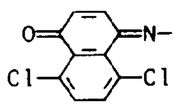 | $W^2$ | 0,16 | D | 588 |
| 10 | 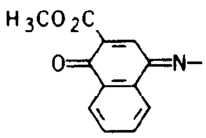 | $W^1$ | 0,55 | B | 612 |
| 11 | 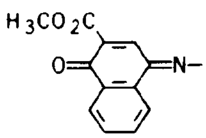 | $W^2$ | 0,55 | B | 631 |
| 12 | 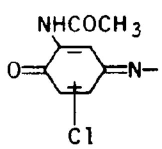 | $W^2$ | 0,18 | A | 675 |
| 13 | 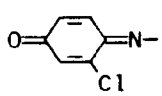 | $W^2$ | 0,26 | A | 619 |
| 14 | 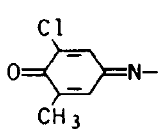 | $W^2$ | 0,28 | B | 631 |

Tabelle 1 (Fortsetzung)

| Bsp.Nr. | Q | W | $R_f$-Wert | Fließmittel | $\lambda_{max}$ [nm] |
|---|---|---|---|---|---|
| 15 | 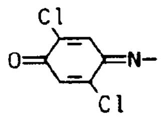 | $W^2$ | 0,24 | B | 661 |
| 16 | 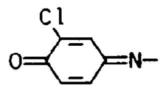 | $W^2$ | 0,21 | B | 635 |
| 17 | 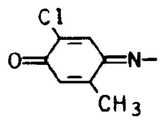 | $W^2$ | 0,34 | B | 633 |
| 18 | 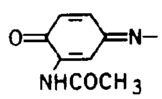 | $W^2$ | 0,18 | A | 628 |
| 19 | 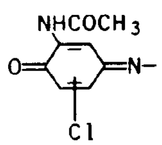 | $W^1$ | 0,28 | B | 642 |
| 20 | 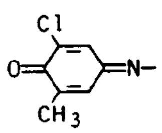 | $W^1$ | 0,17 | C | 600 |
| 21 | 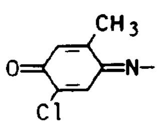 | $W^1$ | 0,25 | C | 603 |

Tabelle 1 (Fortsetzung)

| Bsp.Nr. | Q | W | $R_f$-Wert | Fließmittel | $\lambda_{max}$ [nm] |
|---|---|---|---|---|---|
| 22 | 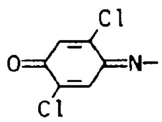 | $W^1$ | 0,21 | C | 633 |
| 23 | 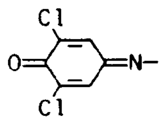 | $W^2$ | 0,28 | A | 665 |
| 24 | 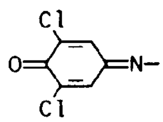 | $W^1$ | 0,51 | B | 631 |
| 25 | 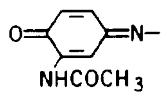 | $W^2$ | 0,49 | A | 616 |

Erläuterung zu Tabelle 2:
Farbstoffe der Formel

Q-W-Q ,

wobei W entweder

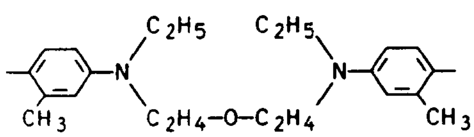

($W^3$)

oder

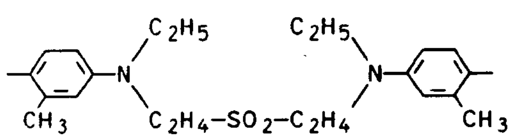

($W^4$)

bedeutet.

$\lambda_{max}$ wurde jeweils in Methylenchlorid (a) oder Aceton (b) gemessen.
Die Symbole der Fließmittel haben folgende Bedeutung.

A: Essigester
B: Toluol/Essigester 3:2 v/v
E: Toluol/Essigester 5:1 v/v

Tabelle 2

| Bsp.Nr. | Q | W | $R_f$-Wert | Laufmittel | $\lambda_{max}$ [nm] |
|---|---|---|---|---|---|
| 26 | 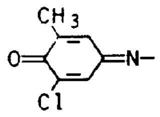 | $W^3$ | 0,54 | E | 633 (b) |
| 27 | 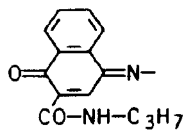 | $W^3$ | 0,43 | E | 673 (b) |
| 28 | 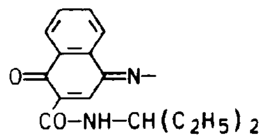 | $W^3$ | 0,45 | E | 647 (b) |
| 29 | 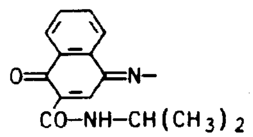 | $W^3$ | 0,30 | E | 673 (b) |
| 30 | 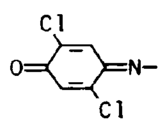 | $W^3$ | 0,52 | E | 663 (b) |
| 31 | 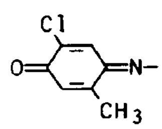 | $W^3$ | 0,58 | E | 636 (b) |

Tabelle 2 (Fortsetzung)

| Bsp.Nr. | Q | W | $R_f$-Wert | Laufmittel | $\lambda_{max}$ [nm] |
|---|---|---|---|---|---|
| 32 | 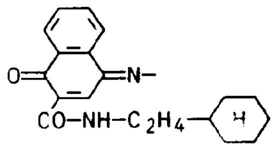 | $W^3$ | 0,49 | E | 675 (b) |
| 33 | 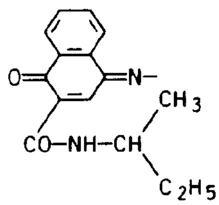 | $W^4$ | 0,86 | A | 644 (a) |
| 34 | 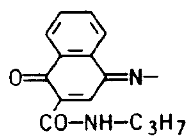 | $W^4$ | 0,69 | A | 643 (a) |
| 35 | 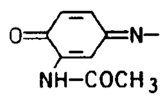 | $W^4$ | 0,48 | A | 614 (a) |
| 36 | 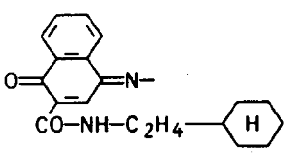 | $W^4$ | 0,15 | E | 647 (a) |
| 37 | 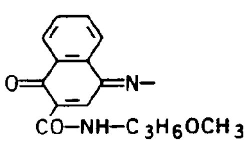 | $W^4$ | 0,18 | A | 644 (a) |

Tabelle 2 (Fortsetzung)

| Bsp.Nr. | Q | W | $R_f$-Wert | Laufmittel | $\lambda_{max}$ [nm] |
|---|---|---|---|---|---|
| 38 | 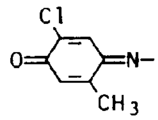 | $W^4$ | 0,76 | B | 612 (a) |
| 39 | 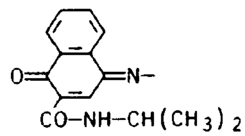 | $W^4$ | 0,81 | A | 649 (a) |
| 40 | 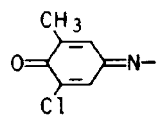 | $W^4$ | 0,89 | A | 610 (b) |
| 41 | 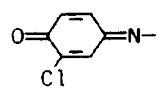 | $W^4$ | 0,88 | A | 615 (b) |
| 42 | 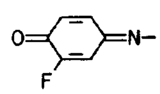 | $W^4$ | 0,88 | A | 601 (b) |
| 43 | 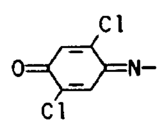 | $W^4$ | 0,74 | B | 646 (b) |

Beispiel 44

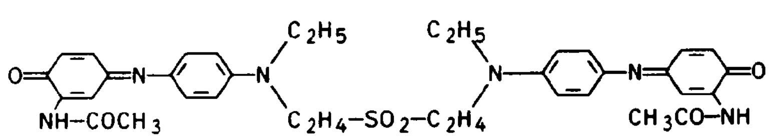

$\lambda_{max}$ ($CH_2Cl_2$): 596 nm
Rf-Wert (Essigester): 0,25

Beispiel 45

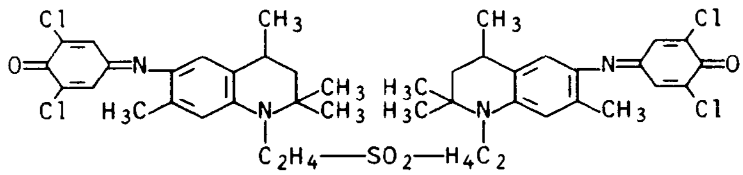

$\lambda_{max}$ ($CH_2Cl_2$): 670 nm
Rf-Wert (Toluol/Essigester 5:1 v/v): 0,27

Transfer der Farbstoffe

Um das Transferverhalten der Farbstoffe quantitativ und in einfacher Weise prüfen zu können, wurde der Thermotransfer mit großflächigen Heizbacken statt eines Thermokopfes durchgeführt, wobei die Transfertemperatur im Bereich 70 °C < T < 120 °C variiert und die Transferzeit auf 2 Minuten festgelegt wurde.

α) Allgemeines Rezept für die Beschichtung der Träger mit Farbstoff: 1 g Bindemittel wurden in 8 ml Toluol/Ethanol (8:2 v/v) bei 40 bis 50 °C gelöst. Dazu wurde eine Lösung aus 0,25 g Farbstoff in 5 ml Tetrahydrofuran eingerührt und gegebenenfalls von unlöslichem Rückstand abfiltriert. Die so erhaltene Druckpaste wurde mit einer 80 μm Rakel auf eine Polyesterfolie (Dicke: 6 bis 10 μm) abgezogen und mit einem Fön getrocknet.

β) Prüfung auf thermische Transferierbarkeit Die verwendeten Farbstoffe wurden in der folgenden Weise geprüft:
Die den zu prüfenden Farbstoff in der Beschichtungsmasse (Vorderseite) enthaltende Polyesterfolie (Geber) wurde mit der Vorderseite auf kommerziell erhältliches (unten näher bezeichnetes) Papier (Nehmer) gelegt und aufgedrückt. Geber/Nehmer wurden dann mit Aluminiumfolie umwickelt und zwischen zwei beheizten Platten bei verschiedener Temperatur T (im Temperaturintervall 70°C < T < 120°C) erhitzt. Die in die glänzende Kunststoffschicht des Nehmers diffundierte Farbstoffmenge ist proportional der optischen Dichte (= Extinktion A). Letztere wurde photometrisch bestimmt. Trägt man den Logarithmus der im Temperaturintervall zwischen 80 und 110°C gemessenen Extinktion A der angefärbten Nehmerpapiere gegen die zugehörige reziproke absolute Temperatur auf, so erhält man Geraden, aus deren Steigung die Aktivierungsenergie $\Delta E_T$ für das Transferexperiment berechnet wird:

$$\Delta E_T = 2,3 \cdot R \cdot \frac{\Delta \log A}{\Delta \left[\frac{1}{T}\right]}$$

Zur vollständigen Charakterisierung wurde aus den Auftragungen zusätzlich die Temperatur T* [°C] entnommen, bei der die Extinktion A der angefärbten Nehmerpapiere den Wert 1 erreicht.

Die in den folgenden Tabellen aufgeführten Farbstoffe wurden nach α) verarbeitet und die erhaltenen, mit Farbstoff beschichteten Träger nach β) auf das Transferverhalten geprüft. In den Tabellen sind jeweils die Thermotransferparameter T* und $\Delta E_T$, gegebenenfalls die Absorptionsmaxima $\lambda_{max}$ der Farbstoffe, die verwendeten Bindemittel sowie das Gewichtsverhältnis Farbstoff:Bindemittel:Hilfsmittel aufgeführt.

Dabei gelten folgende Abkürzungen:

| | |
|---|---|
| F = | Farbstoff |
| B = | Bindemittel |
| EC = | Ethylcellulose |
| VL = | Vylon® 290 (Fa. Toyobo) |
| HCVPP = | Hitachi Color Video Print Paper (Nehmer) |
| VYC = | Hitachi VY-C Paper (Nehmer) |
| VYT = | Hitachi VY-T Paper (Nehmer) |
| VYSX = | Hitachi VY-SX Paper (Nehmer) |
| VYS = | Hitachi VY-S Paper (Nehmer) |
| SV 100 = | Kodak Color Video Print Paper (Nehmer) |

| Bsp. Nr. | Farbstoff Nr. | T* [°C] | $\Delta E_T$ [kJ/mol] | B | F : B | Nehmer |
|---|---|---|---|---|---|---|
| 46 | 45 | 114 | 86 | EC | 1 : 2 | SV 100 |
| 47 | 45 | 118 | 70 | EC | 1 : 2 | HCVPP |
| 48 | 1 | 150 | 66 | EC | 1 : 2 | VYC |
| 49 | 1 | 120 | 48 | EC | 1 : 2 | VYSX |
| 50 | 17 | 86 | 42 | VL | 1 : 4 | VYS |
| 51 | 33 | 120 | 32 | VL | 1 : 2 | HCVPP |
| 52 | 33 | 114 | 48 | VL | 1 : 2 | VYC |
| 53 | 33 | 101 | 78 | VL | 1 : 2 | VYT |
| 54 | 34 | 107 | 52 | VL | 1 : 2 | HCVPP |
| 55 | 34 | 113 | 35 | VL | 1 : 2 | VYC |
| 56 | 34 | 108 | 24 | VL | 1 : 2 | VYT |
| 57 | 35 | 106 | 57 | VL | 1 : 2 | HCVPP |
| 58 | 35 | 111 | 51 | VL | 1 : 2 | VYC |
| 59 | 35 | 101 | 75 | VL | 1 : 2 | VYT |
| 60 | 36 | 118 | 61 | VL | 1 : 2 | VYC |
| 61 | 36 | 101 | 82 | VL | 1 : 2 | VYT |
| 62 | 37 | 93 | 78 | VL | 1 : 2 | VYC |
| 63 | 37 | 87 | 69 | VL | 1 : 2 | VYT |
| 64 | 38 | 127 | 47 | VL | 1 : 4 | HCVPP |
| 65 | 38 | 122 | 43 | VL | 1 : 4 | VYC |
| 66 | 38 | 107 | 51 | VL | 1 : 4 | VYT |
| 67 | 44 | 138 | 74 | EC | 1 : 2 | HCVPP |

Erläuterungen zu Tabelle 4:
Übertragung von Farbstoffen der Formel

Q-W-Q,

wobei W entweder

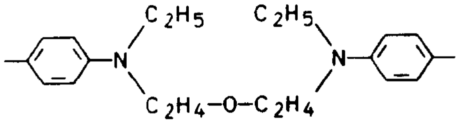

($W^5$)

oder

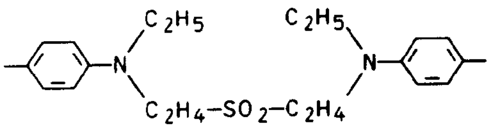 (W6)

bedeutet.

$\lambda_{max}$ wurde jeweils in Methylenchlorid gemessen.

Tabelle 4

| Bsp. Nr. | Q | W | $\lambda_{max}$ [nm] | T* [°C] | $\Delta E_T$ [kJ/mol] | B | F : B | Nehmer |
|---|---|---|---|---|---|---|---|---|
| 68 | 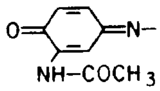 | W5 | 619 | 118 | 85 | EC | 1 : 2 | VYC |
| 69 | 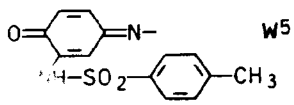 | W5 | 627 | 129 | 88 | EC | 1 : 2 | VYC |
| 70 | 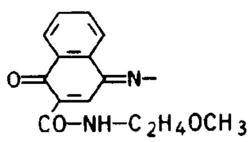 | W6 | 627 | 131 | 64 | EC | 1 : 2 | HCVPP |
| 71 | 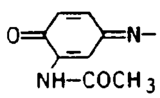 | W6 | 596 | 138 | 74 | EC | 1 : 2 | HCVPP |
| 71 | 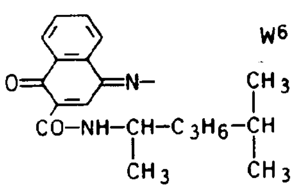 | W6 | 624 | 144 | 98 | EC | 1 : 2 | HCVPP |

In analoger Weise können die folgenden Farbstoffe übertragen werden.

Bsp.Nr.

73 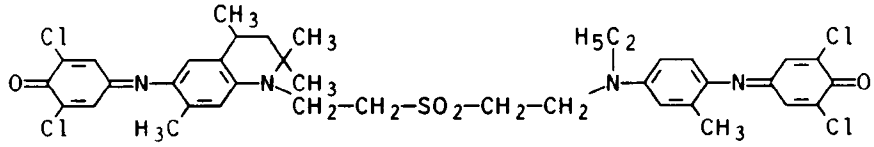

74 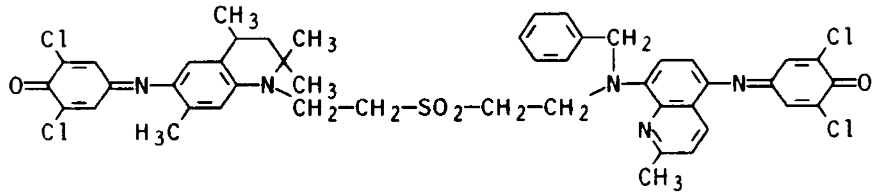

75 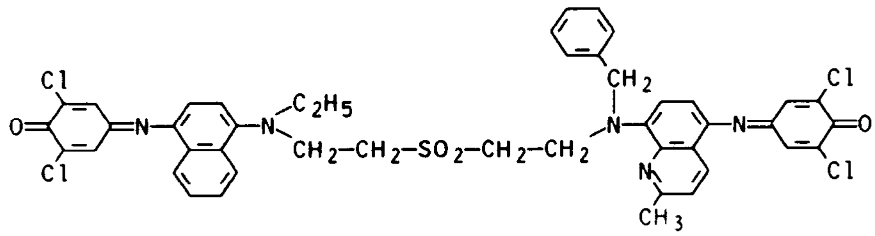

76 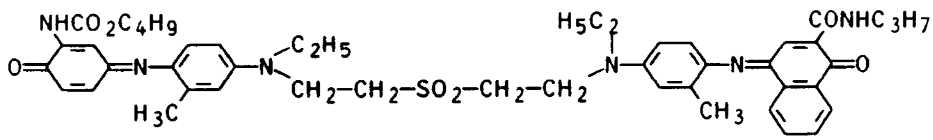

77 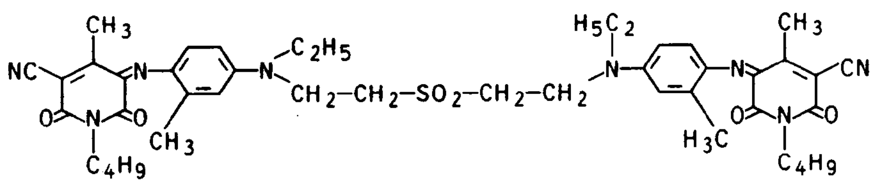

78 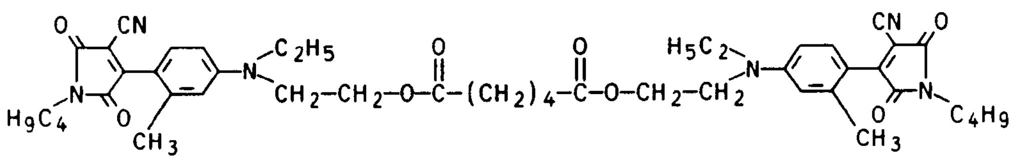

Bsp.Nr.

79

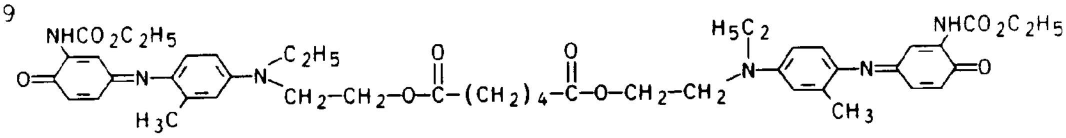

80

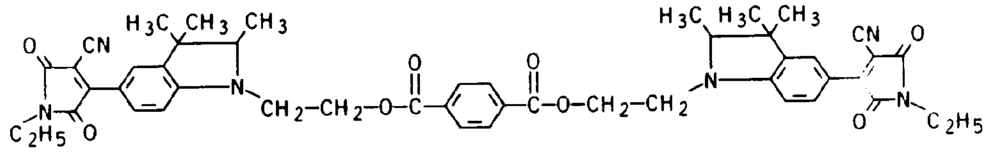

81

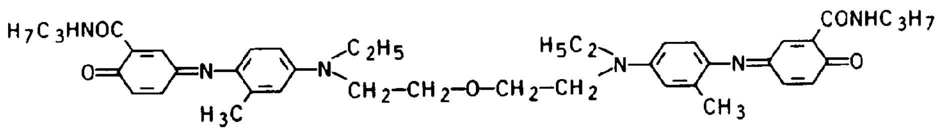

82

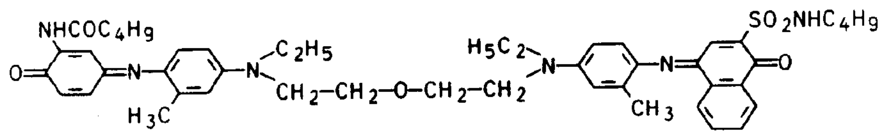

83

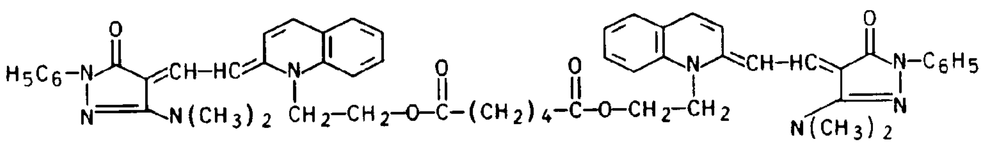

84

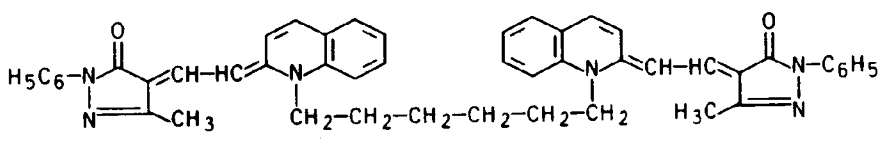

85

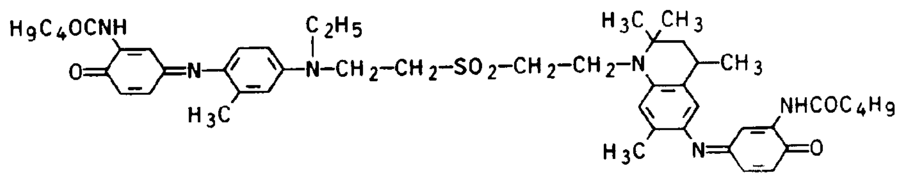

Bsp.Nr.

86 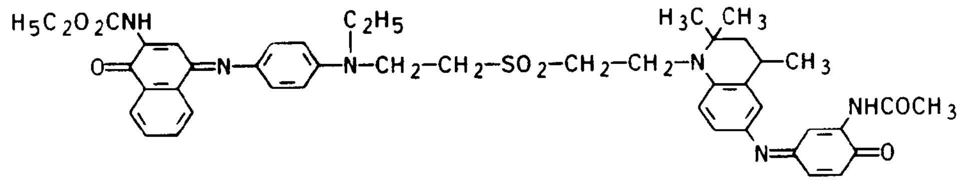

87 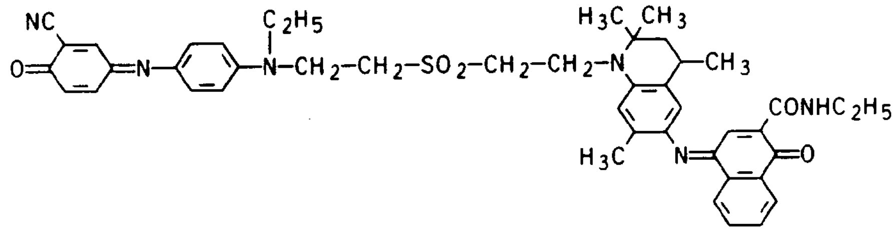

88 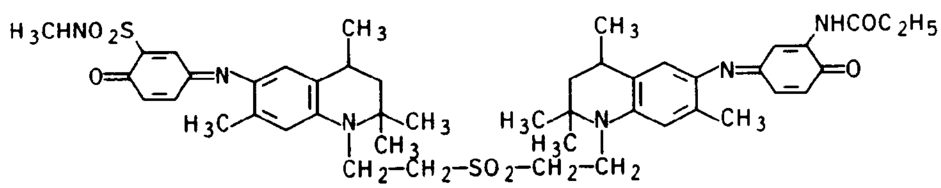

89 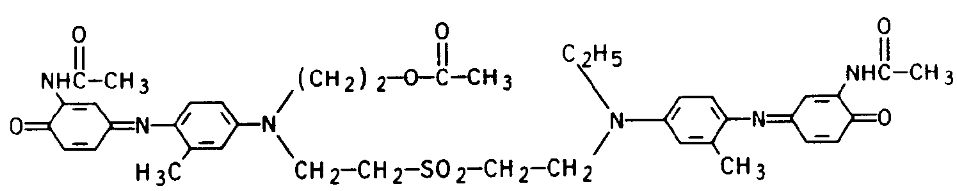

**Patentansprüche**

1. Bichromophore Farbstoffe der Formel I

$$Z^2\text{-}Z^1\text{-}L\text{-}Y^1\text{-}Y^2 \qquad (1)$$

in der

L für ein Brückenglied, das keine Konjugation von $\pi$-Elektronen zwischen den Resten $Z^1$ und $Y^1$ zuläßt,

$Z^1$ und $Y^1$ gleich oder verschieden sind und in Verbindung mit dem Brückenglied L unabhängig voneinander jeweils für einen Rest der Formel

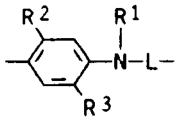 , 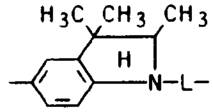 , 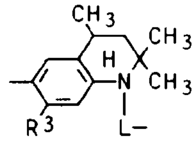 ,

(IIa) (IIb) (IIc)

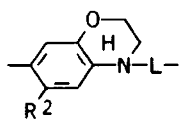,

(IId)

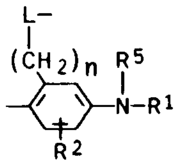,

(IIe)

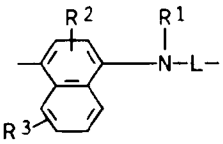,

(IIf)

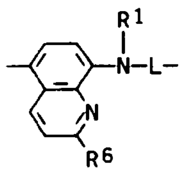,

(IIg)

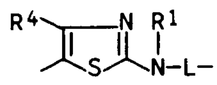,

(IIh)

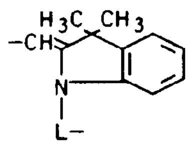,

(IIi)

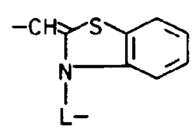 oder

(IIj)

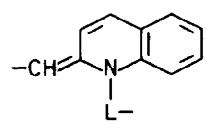,

(IIk)

worin

n gleich 0 oder 1,

$R^1$ und $R^5$ gleich oder verschieden sind und unabhängig voneinander jeweils Alkyl, Alkoxyalkyl, Alkoxycarbonylalkyl oder Alkanoyloxyalkyl, wobei diese Reste jeweils bis zu 10 Kohlenstoffatome aufweisen und gegebenenfalls durch Hydroxy oder Cyano substituiert sein können, Wasserstoff, Benzyl, Cyclohexyl, Phenyl oder Tolyl,

$R^2$ und $R^3$ gleich oder verschieden sind und unabhängig voneinander jeweils Wasserstoff, $C_1$-$C_8$-Alkyl, $C_1$-$C_6$-Alkoxy, $C_1$-$C_6$-Alkanoylamino oder $C_1$-$C_6$-Alkylsulfonylamino,

$R^4$ Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Thienyl oder den Rest -$NHR^1$, wobei $R^1$ die obengenannte Bedeutung besitzt, und

$R^6$ Wasserstoff oder $C_1$-$C_8$-Alkyl bedeuten, und

$Z^2$ und $Y^2$ gleich oder verschieden sind und unabhängig voneinander jeweils für einen Rest der Formel

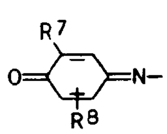,

(IIIa)

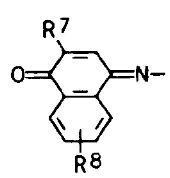,

(IIIb)

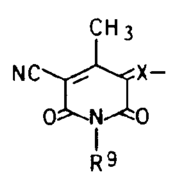,

(IIIc)

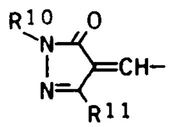 , 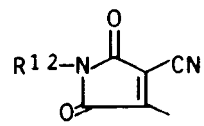 oder 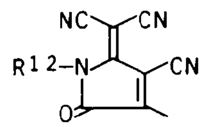

(IIId) (IIIe) (IIIf)

stehen, worin

X Stickstoff oder den Rest CH,

$R^7$ $C_1$-$C_6$-Alkoxycarbonyl, $C_1$-$C_6$-Monoalkylcarbamoyl, $C_1$-$C_6$-Monoalkylsulfamoyl, $C_1$-$C_6$-Alkanoylamino oder $C_1$-$C_6$-Alkylsulfonylamino, wobei die Alkylgruppen jeweils durch 1 oder 2 Sauerstoffatome unterbrochen sein können, $C_5$-$C_7$-Cycloalkoxycarbonyl, $C_5$-$C_7$-Monocycloalkylcarbamoyl, $C_5$-$C_7$-Monocycloalkylsulfamoyl, $C_5$-$C_7$-Cycloalkylcarbonylamino, Phenoxycarbonyl, Monophenylcarbamoyl, Monophenylsulfamoyl, Benzoylamino, Phenylsulfonylamino, Methylphenylsulfonylamino, Fluor oder Chlor,

$R^8$ $C_1$-$C_8$-Alkyl, $C_1$-$C_6$-Alkanoylamino oder $C_1$-$C_6$-Alkylsulfonylamino, wobei die Alkylgruppen jeweils durch 1 oder 2 Sauerstoffatome unterbrochen sein können, $C_5$-$C_7$-Cycloalkylcarbonylamino, $C_5$-$C_7$-Cycloalkylsulfonylamino, Benzoylamino, Phenylsulfonylamino, Wasserstoff, Fluor oder Chlor,

$R^9$ Wasserstoff oder gegebenenfalls durch 1 oder 2 Sauerstoffatome unterbrochenes $C_1$-$C_8$-Alkyl,

$R^{10}$ Phenyl oder $C_1$-$C_4$-Alkylphenyl,

$R^{11}$ $C_1$-$C_8$-Alkyl oder $C_1$-$C_6$-Dialkylamino und

$R^{12}$ Wasserstoff oder $C_1$-$C_8$-Alkyl bedeuten.

**2.** Verfahren zur Übertragung von bichromophoren Methinfarbstoffen von einem Träger auf ein mit Kunststoff beschichtetes Papier mit Hilfe einer Energiequelle, dadurch gekennzeichnet, daß man einen Träger verwendet, auf dem sich ein oder mehrere Farbstoffe der Formel I

$$Z^2\text{-}Z^1\text{-}L\text{-}Y^1\text{-}Y^2 \qquad (I)$$

befinden, in der

L für ein Brückenglied, das keine Konjugation von $\pi$-Elektronen zwischen den Resten $Z^1$ und $Y^1$ zuläßt,

$Z^1$ und $Y^1$ gleich oder verschieden sind und in Verbindung mit dem Brückenglied L unabhängig voneinander jeweils für einen Rest der Formel

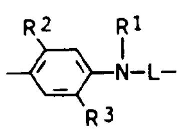 , 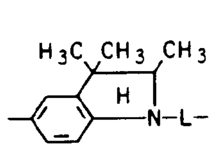 , 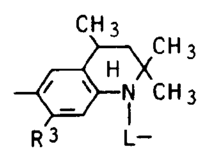 ,

(IIa) (IIb) (IIc)

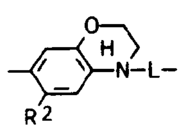 , 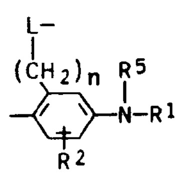 , 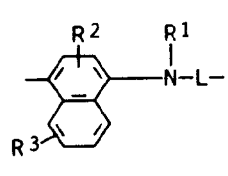 ,

(IId) (IIe) (IIf)

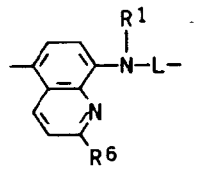,

(IIg)

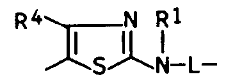,

(IIh)

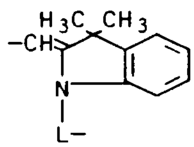,

(IIi)

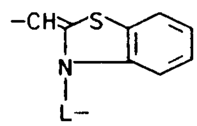

(IIj)

oder

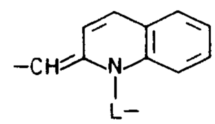,

(IIk)

worin

| | |
|---|---|
| n | gleich 0 oder 1, |
| $R^1$ und $R^5$ | gleich oder verschieden sind und unabhängig voneinander jeweils Alkyl, Alkoxyalkyl, Alkoxycarbonylalkyl oder Alkanoyloxyalkyl, wobei diese Reste jeweils bis zu 10 Kohlenstoffatome aufweisen und gegebenenfalls durch Hydroxy oder Cyano substituiert sein können, Wasserstoff, Benzyl, Cyclohexyl, Phenyl oder Tolyl, |
| $R^2$ und $R^3$ | gleich oder verschieden sind und unabhängig voneinander jeweils Wasserstoff, $C_1$-$C_8$-Alkyl, $C_1$-$C_6$-Alkoxy, $C_1$-$C_6$-Alkanoylamino oder $C_1$-$C_6$-Alkylsulfonylamino, |
| $R^4$ | Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Thienyl oder den Rest -$NHR^1$, wobei $R^1$ die obengenannte Bedeutung besitzt, und |
| $R^6$ | Wasserstoff oder $C_1$-$C_8$-Alkyl bedeuten und |
| $Z^2$ und $Y^2$ | gleich oder verschieden sind und unabhängig voneinander jeweils für einen Rest der Formel |

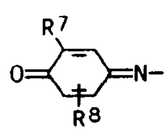,

(IIIa)

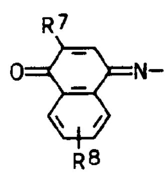,

(IIIb)

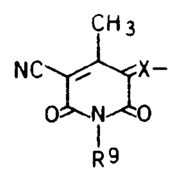,

(IIIc)

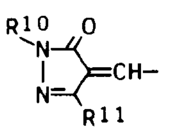,

(IIId)

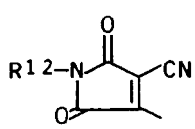

(IIIe)

oder

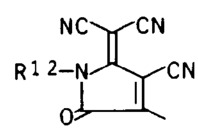

(IIIf)

stehen, worin

| | |
|---|---|
| X | Stickstoff oder den Rest CH, |
| $R^7$ | $C_1$-$C_6$-Alkoxycarbonyl, $C_1$-$C_6$-Monoalkylcarbamoyl, $C_1$-$C_6$-Monoalkylsulfamoyl, $C_1$-$C_6$-Alkanoylamino oder $C_1$-$C_6$-Alkylsulfonylamino, wobei die Alkylgruppen jeweils durch 1 oder 2 Sauerstoffatome unterbrochen sein können, $C_5$-$C_7$-Cycloalkoxycarbonyl, $C_5$-$C_7$-Monocycloalkylcarbamoyl, $C_5$-$C_7$-Monocycloalkylsulfamoyl, $C_5$-$C_7$-Cycloalkylcarbonylamino, Phenoxycarbonyl, Monophenylcarbamoyl, Monophenylsulfamoyl, Benzoylamino, |

Phenylsulfonylamino, Methylsulfonylphenylamino, Fluor oder Chlor,

$R^8$ $C_1$-$C_8$-Alkyl, $C_1$-$C_6$-Alkanoylamino oder $C_1$-$C_6$-Alkylsulfonylamino, wobei die Alkylgruppen jeweils durch 1 oder 2 Sauerstoffatome unterbrochen sein können, $C_5$-$C_7$-Cycloalkylcarbonylamino, $C_5$-$C_7$-Cycloalkylsulfonylamino, Benzoylamino, Phenylsulfonylamino, Wasserstoff, Fluor oder Chlor,

$R^9$ Wasserstoff oder gegebenenfalls durch 1 oder 2 Sauerstoffatome unterbrochenes $C_1$-$C_8$-Alkyl,

$R^{10}$ Phenyl oder $C_1$-$C_4$-Alkylphenyl,

$R^{11}$ $C_1$-$C_8$-Alkyl oder $C_1$-$C_6$-Dialkylamino und

$R^{12}$ Wasserstoff oder $C_1$-$C_8$-Alkyl bedeuten.

## Claims

1. A bichromophoric dye of the formula I

$$Z^2\text{-}Z^1\text{-}L\text{-}Y^1\text{-}Y^2 \qquad (I)$$

where

L is a bridge member which does not permit any conjugation of $\pi$-electrons between $Z^1$ and $Y^1$,

$Z^1$ and $Y^1$ are identical or different and, together with the bridge member L, each is independently of the other a radical of the formula

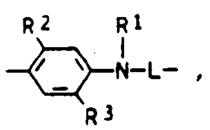
(IIa)

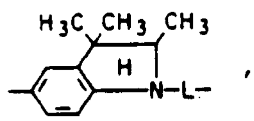
(IIb)

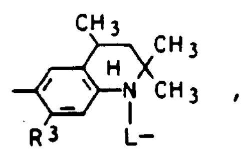
(IIc)

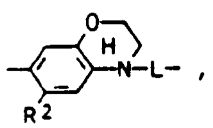
(IId)

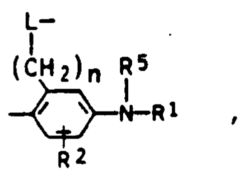
(IIe)

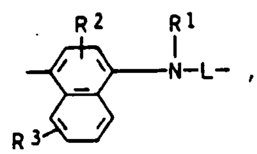
(IIf)

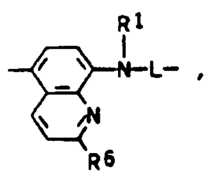
(IIg)

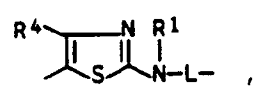
(IIh)

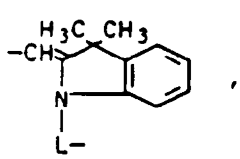
(IIi)

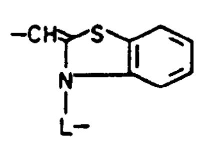
(IIj)

or

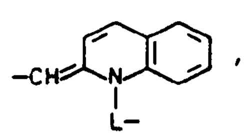
(IIk)

where

n is 0 or 1,

$R^1$ and $R^5$ are identical or different and each is independently of the other alkyl, alkoxyalkyl, alkoxycarbonylalkyl or alkanoyloxyalkyl, which may each have up to 10 carbon atoms and be hydroxyl- or cyano-substituted, hydrogen, benzyl, cyclohexyl, phenyl or tolyl,

$R^2$ and $R^3$ are identical or different and each is independently of the other hydrogen, $C_1$-$C_8$-alkyl, $C_1$-$C_6$-alkoxy, $C_1$-$C_6$-alkanoylamino or $C_1$-$C_6$-alkylsulfonylamino,

$R^4$ is hydrogen, halogen, $C_1$-$C_8$-alkyl, unsubstituted or $C_1$-$C_4$-alkyl- or $C_1$-$C_4$-alkoxy-substituted phenyl, unsubstituted or $C_1$-$C_4$-alkyl- or $C_1$-$C_4$-alkoxy-substituted benzyl, cyclohexyl, thienyl or -NHR$^1$, where $R^1$ is as defined above, and

$R^6$ is hydrogen or $C_1$-$C_8$-alkyl, and

$Z^2$ and $Y^2$ are identical or different and each is independently of the other a radical of the formula

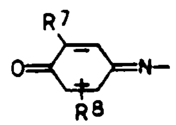,
(IIIa)

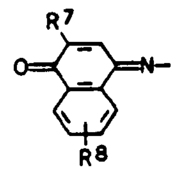,
(IIIb)

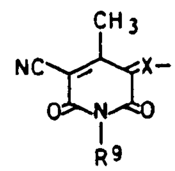,
(IIIc)

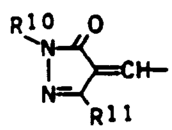,
(IIId)

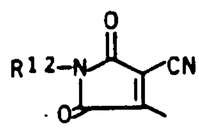
(IIIe)

or

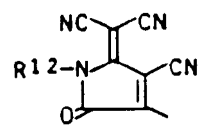
(IIIf)

where

X is nitrogen or CH,

$R^7$ is $C_1$-$C_6$-alkoxycarbonyl, $C_1$-$C_6$-monoalkylcarbamoyl, $C_1$-$C_6$-monoalkylsulfamoyl, $C_1$-$C_6$-alkanoylamino or $C_1$-$C_6$-alkylsulfonylamino, wherein alkyl may in each case be interrupted by 1 or 2 oxygen atoms, or $C_5$-$C_7$-cycloalkoxycarbonyl, Cp16.66h7.2vsb3T$_5$-$C_7$-monocycloalkylcar $C_5$-$C_7$-monocycloalkylsulfamoyl, $C_5$-$C_7$-cycloalkylcarbonylamino, phenoxycarbonyl, monophenylcarbamoyl, monophenylsulfamoyl, benzoylamino, phenylsulfonylamino, methylphenylsulfonylamino, fluorine or chlorine,

$R^8$ is $C_1$-$C_8$-alkyl, $C_1$-$C_6$-alkanoylamino or $C_1$-$C_6$-alkylsulfonylamino, wherein alkyl may in each case be interrupted by 1 or 2 oxygen atoms, or $C_5$-$C_7$-cycloalkylcarbonylamino, $C_5$-$C_7$-cycloalkylsulfonylamino, benzoylamino, phenylsulfonylamino, hydrogen, fluorine or chlorine,

$R^9$ is hydrogen or $C_1$-$C_8$-alkyl which may be interrupted by 1 or 2 oxygen atoms,

$R^{10}$ is phenyl or $C_1$-$C_4$-alkylphenyl,

$R^{11}$ is $C_1$-$C_8$-alkyl or $C_1$-$C_6$-dialkylamino, and

$R^{12}$ is hydrogen or $C_1$-$C_8$-alkyl.

**2.** A process for transferring a bichromophoric methine dye from a transfer to a sheet of plastic-coated paper with the aid of an energy source, which comprises using a transfer on which there is or are one or more dyes of the formula I

$$Z^2\text{-}Z^1\text{-}L\text{-}Y^1\text{-}Y^2 \qquad (I)$$

where

L is a bridge member which does not permit any conjugation of $\pi$-electrons between $z^1$ and $Y^1$,

$Z^1$ and $Y^1$ are identical or different and, together with the bridge member L, each is independently of the other a radical of the formula

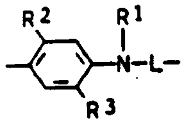 ,
(IIa)

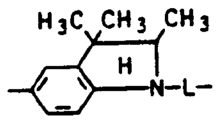 ,
(IIb)

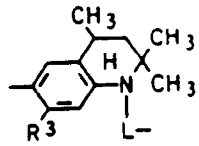 ,
(IIc)

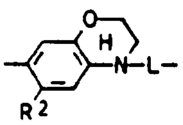 ,
(IId)

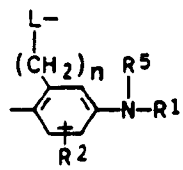 ,
(IIe)

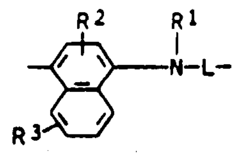 ,
(IIf)

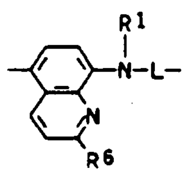 ,
(IIg)

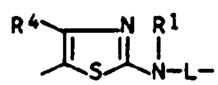 ,
(IIh)

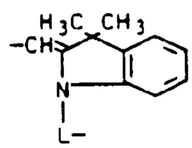 ,
(IIi)

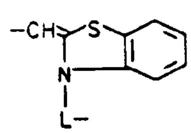 or
(IIj)

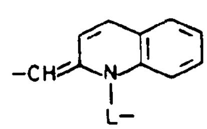 ,
(IIk)

where

n is 0 or 1,

$R^1$ and $R^5$ are identical or different and each is independently of the other alkyl, alkoxyalkyl, alkoxycarbonylalkyl or alkanoyloxyalkyl, which may each have up to 10 carbon atoms and be hydroxyl- or cyano-substituted, hydrogen, benzyl, cyclohexyl, phenyl or tolyl,

$R^2$ and $R^3$ are identical or different and each is independently of the other hydrogen, $C_1$-$C_8$-alkyl, $C_1$-$C_6$-alkoxy, $C_1$-$C_6$-alkanoylamino or $C_1$-$C_6$-alkylsulfonylamino,

$R^4$ is hydrogen, halogen, $C_1$-$C_8$-alkyl, unsubstituted or $C_1$-$C_4$-alkyl- or $C_1$-$C_4$-alkoxy-substituted phenyl, unsubstituted or $C_1$-$C_4$-alkyl- or $C_1$-$C_4$-alkoxy-substituted benzyl, cyclohexyl, thienyl or -$NHR^1$, where $R^1$ is as defined above, and

$R^6$ is hydrogen or $C_1$-$C_8$-alkyl, and

$Z^2$ and $Y^2$ are identical or different and each is independently of the other a radical of the formula

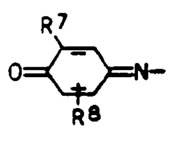 ,
(IIIa)

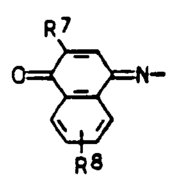 ,
(IIIb)

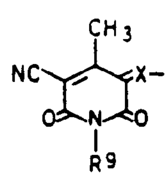 ,
(IIIc)

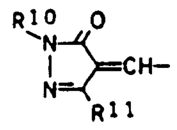,
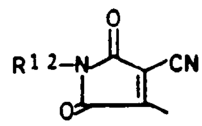
or
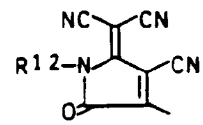

(IIId) (IIIe) (IIIf)

where

X
is nitrogen or CH,

$R^7$
is $C_1$-$C_6$-alkoxycarbonyl, $C_1$-$C_6$-monoalkylcarbamoyl, $C_1$-$C_6$-monoalkylsulfamoyl, $C_1$-$C_6$-alkanoylamino or $C_1$-$C_6$-alkylsulfonylamino, wherein alkyl may in each case be interrupted by 1 or 2 oxygen atoms, or $C_5$-$C_7$-cycloalkoxycarbonyl, $C_5$-$C_7$-monocycloalkylcarbamoyl, $C_5$-$C_7$-monocycloalkylsulfamoyl, $C_5$-$C_7$-cycloalkylcarbonylamino, phenoxycarbonyl, monophenylcarbamoyl, monophenylsulfamoyl, benzoylamino, phenylsulfonylamino, methylsulfonylphenylamino, fluorine or chlorine,

$R^8$
is $C_1$-$C_8$-alkyl, $C_1$-$C_6$-alkanoylamino or $C_1$-$C_6$-alkylsulfonylamino, wherein alkyl may in each case be interrupted by 1 or 2 oxygen atoms, or $C_5$-$C_7$-cycloalkylcarbonylamino, $C_5$-$C_7$-cycloalkylsulfonylamino, benzoylamino, phenylsulfonylamino, hydrogen, fluorine or chlorine,

$R^9$
is hydrogen or $C_1$-$C_8$-alkyl which may be interrupted by 1 or 2 oxygen atoms,

$R^{10}$
is phenyl or $C_1$-$C_4$-alkylphenyl,

$R^{11}$
is $C_1$-$C_8$-alkyl or $C_1$-$C_6$-dialkylamino, and

$R^{12}$
is hydrogen or $C_1$-$C_8$-alkyl.

## Revendications

1. Colorants bichromophores de formule I

$$Z^2\text{-}Z^1\text{-}L\text{-}Y^1\text{-}Y^2 \quad (I)$$

dans laquelle

L
est mis pour un maillon de pontage qui ne permet pas de conjugaison d'electrons π entre les restes $Z^1$ et $Y^1$,

$Z^1$ et $Y^1$
sont identiques ou différents et sont mis chacun, indépendamment l'un de l'autre et en combinaison avec le maillon de pontage L, pour un reste de formule

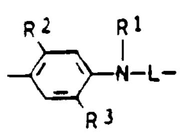,
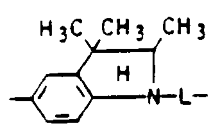,
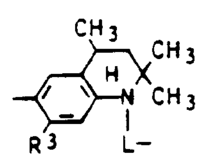,

(IIa) (IIb) (IIc)

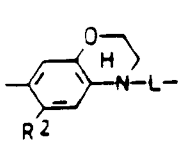,
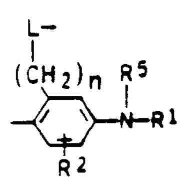,
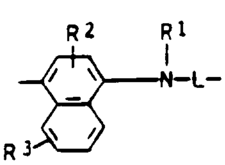,

(IId) (IIe) (IIf)

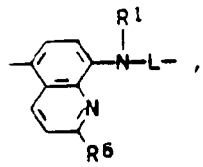 ,
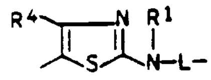 ,

(IIg) (IIh)

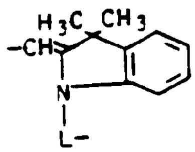 ,
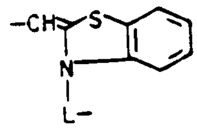 ou
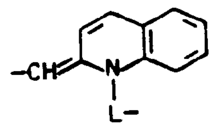 ,

(IIi) (IIj) (IIk)

où

- n est égal à 0 ou 1,
- $R^1$ et $R^5$ sont identiques ou différents et représentent chacun, indépendamment l'un de l'autre, un reste alkyle, alcoxyalkyle, alcoxycarbonylalkyle ou alcanoyloxyalkyle, ces restes pouvant renfermer chacun jusqu'à 10 atomes de carbone et pouvant être éventuellement substitués par des groupements hydroxy ou cyano, un atome d'hydrogène, un reste benzyle, cyclohexyle, phényle ou tolyle,
- $R^2$ et $R^3$ sont identiques ou différents et représentent chacun, indépendamment l'un de l'autre, un atome d'hydrogène, un reste alkyle en $C_1$-$C_8$, alcoxy en $C_1$-$C_6$, alcanoylamino en $C_1$-$C_6$ ou alkylsulfonylamino en $C_1$-$C_6$,
- $R^4$ représente un atome d'hydrogène, d'halogène, un reste alkyle en $C_1$-$C_8$, phényle éventuellement substitué par un groupement alkyle en $C_1$-$C_4$ ou alcoxy en $C_1$-$C_4$, benzyle éventuellement substitué par un groupement alkyle en $C_1$-$C_4$ ou alcoxy en $C_1$-$C_4$, cyclohexyle, thiényle ou le reste -$NHR^1$, $R^1$ ayant la signification donnée ci-dessus, et
- $R^6$ représente un atome d'hydrogène ou un reste alkyle en $C_1$-$C_8$, et
- $Z^2$ et $Y^2$ sont identiques ou différents et sont mis chacun, indépendamment l'un de l'autre, pour un reste de formule

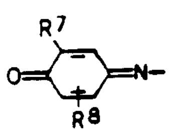 ,
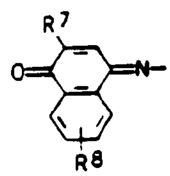 ,
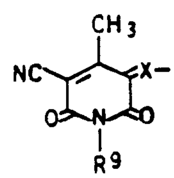 ,

(IIIa) (IIIb) (IIIc)

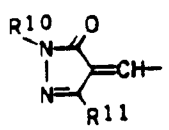 ,
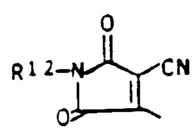 ou
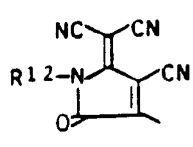

(IIId) (IIIe) (IIIf)

où

- X représent un atome d'azote ou le reste CH,
- $R^7$ représente un reste (alcoxy en $C_1$-$C_6$)carbonyle, mona(alkyle en $C_1$-$C_6$)carbamoyle, monoalkylsulfamoyle en $C_1$-$C_6$, alcanoylamino en $C_1$-$C_6$ ou alkylsulfonylamino en $C_1$-$C_6$, les

groupements alkyle pouvant être interrompus chaque fois par 1 ou 2 atomes d'oxygène, (cycloalcoxy en $C_5$-$C_7$)carbonyle, mono(cycloalkyle en $C_5$-$C_7$)carbamoyle, monocycloalkylsulfamoyle en $C_5$-$C_7$, (cycloalkyle en $C_5$-$C_7$)carbonylamino, phénoxycarbonyle, monophénylcarbamoyle, monophénylsulfamoyle, benzoylamino, phénylsulfonylamino, méthylphénylsulfonylamino, un atome de fluor ou de chlore,

$R^8$ représente un reste alkyle en $C_1$-$C_8$, alcanoylamino en $C_1$-$C_6$ ou alkylsulfonylamino en $C_1$-$C_6$, les groupements alkyle pouvant être interrompus chaque fois par 1 ou 2 atomes d'oxygène, (cycloalkyle en $C_5$-$C_7$)carbonylamino, cycloalkylsulfonylamino en $C_5$-$C_7$, benzoylamino, phenylsulfonylamino, un atome d'hydrogène, de fluor ou de chlore,

$R^9$ représente un atome d'hydrogène ou un reste alkyle en $C_1$-$C_8$ éventuellement interrompu par 1 ou 2 atomes d'oxygène,

$R^{10}$ représente un reste phényle ou (alkyle en $C_1$-$C_4$)phényle

$R^{11}$ représente un reste alkyle en $C_1$-$C_8$ ou di(alkyle en $C_1$-$C_6$)amino et

$R^{12}$ représente un atome d'hydrogéne ou un reste alkyle en $C_1$-$C_8$.

2. Procédé de transfert de colorants methiniques bichromophores, à partir d'un support, sur une feuille de papier enduite de matière plastique, au moyen d'une source d'énergie, caractérisé en ce qu'on utilise un support sur lequel se trouvent un ou plusieurs colorants de formule I

$$Z^2\text{-}Z^1\text{-}L\text{-}Y^1\text{-}Y^2 \qquad (I)$$

dans laquelle

L est mis pour un maillon de pontage qui ne permet pas de conjugaison d'électrons $\pi$ entre les restes $Z^1$ et $Y^1$,

$Z^1$ et $Y^1$ sont identiques ou différents et sont mis chacun, indépendamment l'un de l'autre et en combinaison avec le maillon de pontage L, pour un reste de formule

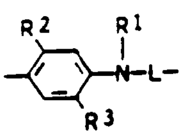 ,

(IIa)

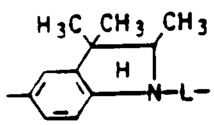 ,

(IIb)

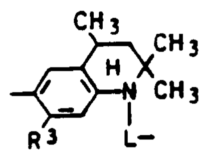 ,

(IIc)

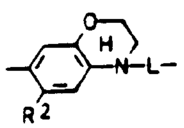 ,

(IId)

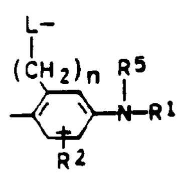 ,

(IIe)

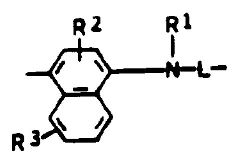 ,

(IIf)

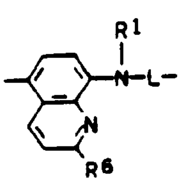 ,

(IIg)

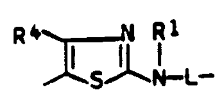 ,

(IIh)

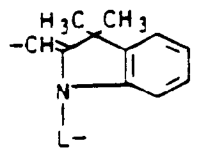 , 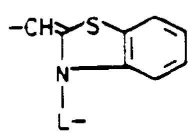 ou 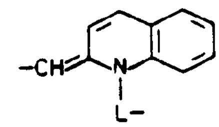 ,

(IIi) (IIj) (IIk)

où

- n : est égal à 0 ou 1,
- $R^1$ et $R^5$ : sont identiques ou différents et représentent chacun, indépendamment l'un de l'autre, un reste alkyle, alcoxyalkyle, alcoxycarbonylalkyle ou alcanoyloxyalkyle, ces restes pouvant renfermer chacun jusqu'à 10 atomes de carbone et pouvant être éventuellement substitués par des groupements hydroxy ou cyano, un atome d'hydrogène, un reste benzyle, cyclohexyle, phényle ou tolyle,
- $R^2$ et $R^3$ : sont identiques ou différents et représentent chacun, indépendamment l'un de l'autre, un atome d'hydrogène, un reste alkyle en $C_1$-$C_8$, alcoxy en $C_1$-$C_6$, alcanoylamino en $C_1$-$C_6$ ou alkylsulfonylamino en $C_1$-$C_6$,
- $R^4$ : représente un atome d' hydrogène, d'halogène, un reste alkyle en $C_1$-$C_8$, phényle éventuellement substitué par un groupement alkyle en $C_1$-$C_4$ ou alcoxy en $C_1$-$C_4$, benzyle éventuellement substitué par un groupement alkyle en $C_1$-$C_4$ ou alcoxy en $C_1$-$C_4$ , cyclohexyle, thiényle ou le reste -$NHR^1$, $R^1$ ayant la signification donnée ci-dessus, et
- $R^6$ : représente un atome d'hydrogène ou un reste alkyle en $C_1$-$C_8$, et
- $Z^2$ et $Y^2$ : sont identiques ou différents et sont mis chacun, indépendamment l'un de l'autre, pour un reste de formule

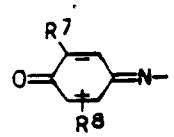 , 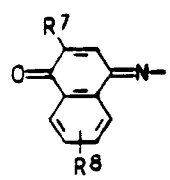 , 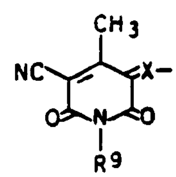 ,

(IIIa) (IIIb) (IIIc)

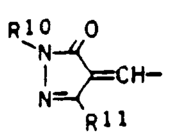 , 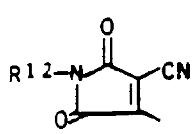 ou 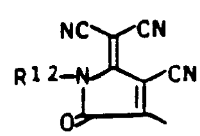

(IIId) (IIIe) (IIIf)

où

- X : représente un atome d'azote ou le reste CH,
- $R^7$ : représente un reste (alcoxy en $C_1$-$C_6$)carbonyle, mono(alkyle en $C_1$-$C_6$)carbamoyle, monoalkylsulfamoyle en $C_1$-$C_6$ alcanoylamino en $C_1$-$C_6$ ou alkylsulfonylamino en $C_1$-$C_6$, les groupements alkyle pouvant être interrompus chaque fois par 1 ou 2 atomes d'oxygène, (cycloalcoxy en $C_5$-$C_7$)carbonyle, mono(cycloalkyle en $C_5$-$C_7$)carbamoyle, monocycloalkylsulfamoyle en $C_5$-$C_7$,(cycloalkyle en $C_5$-$C_7$)carbonylamino phénoxycarbonyle, monophénylcarbamoyle, monophénylsulfamoyle, benzoylamino, phénylsulfonylamino, méthylphénylsulfonylamino, un atome de fluor ou de chlore,
- $R^8$ : représente un reste alkyle en $C_1$-$C_8$, alcanoylamino en $C_1$-$C_6$ ou alkylsulfonylamino en $C_1$-$C_6$, les groupements alkyle pouvant être interrompus chaque fois par 1 ou 2 atomes d'oxygène, (cycloalkyle en $C_5$-$C_7$)carbonylamino, cycloalkylsulfonylamino en $C_5$-$C_7$, benzoylamino, phénylsulfonylamino, un atome d'hydrogène, de fluor ou de chlore,
- $R^9$ : représente un atome d'hydrogène ou un reste alkyle en $C_1$-$C_8$ éventuellement interrompu par 1 ou 2 atomes d'oxygène,

$R^{10}$ représente un reste phényle ou (alkyle en $C_1$-$C_4$) phényle
$R^{11}$ représente un reste alkyle en $C_1$-$C_8$ ou di(alkyle en $C_1$-$C_6$)amino et
$R^{12}$ représente un atome d'hydrogène ou un reste alkyle en $C_1$-$C_8$.